# EUROPÄISCHE PATENTSCHRIFT

(11) **EP 3 345 978 B1**
(45) Veröffentlichungstag und Bekanntmachung des Hinweises auf die Patenterteilung: **03.06.2020**
(21) Anmeldenummer: 17204553.6
(22) Anmeldetag: 30.11.2017
(51) Int. Cl.: C09J 4/00, C09J 133/04

(54) **HYBRIDBINDEMITTEL SOWIE DESSEN VERWENDUNG**
HYBRID ADHESIVE AND ITS USE
LIANT HYBRIDE AINSI QUE SON UTILISATION

(30) Priorität: 12.12.2016 DE 102016124075
(43) Veröffentlichungstag der Anmeldung: 11.07.2018
(73) Patentinhaber: fischerwerke GmbH & Co. KG, 72178 Waldachtal (DE)
(72) Erfinder: WEINELT, Christian, 79331 Teningen (DE); VOGEL, Martin, 79286 Glottertal (DE)
(74) Vertreter: Suchy, Ulrich Johannes

(56) Entgegenhaltungen:
- WO-A1-2016/206777
- US-A1- 2011 201 726
- US-A1- 2011 253 309
- US-A1- 2012 220 736
- US-A1- 2012 270 961
- US-A1- 2016 039 960

## Beschreibung

Die Erfindung gemäß Ansprüchen 1 bis 13 betrifft ein Hybridbindemittelsystem (Hybridharzsystem) für die chemische Befestigungstechnik, insbesondere zum Befestigen von Verankerungsmitteln in Bohrlöchern, welches ein Reaktionsharz auf Basis radikalisch polymerisierbarer ungesättigter Verbindungen und ein Reaktionsharz, welches mit einem Amin reagieren kann, beinhaltet, sowie dessen Verwendung und weitere nachstehend genannte Aspekte (Ausführungsformen) der Erfindung.

Im Bereich der chemischen Befestigungstechnik haben sich vor allem zwei unterschiedliche Systeme etabliert: Eines auf Basis radikalisch polymerisierbarer, ethylenisch ungesättigter Verbindungen und eines auf Epoxid-Amin-Basis. Ein radikalisch härtbares System wird in der Regel mit Peroxiden gehärtet.

Beide Systeme weisen Vor- und Nachteile auf. Radikalisch härtende Systeme zeichnen sich durch eine schnelle Tieftemperaturhärtung (z.B.: - 10 °C) aus, zeigen jedoch eine relativ hohe Schrumpfung ("Schrumpf") und Schwächen bei den Auszugswerten. Systeme auf Epoxid-Amin-Basis zeigen zwar eine deutlich langsamere Härtungsgeschwindigkeit bei niedrigen Temperaturen (z.B.: < + 5 °C), weisen hingegen wesentlich weniger Schrumpf und deutlich höhere Auszugswerte auf.

Um die Vorteile beider Systeme zu vereinen, wurden dualhärtende Bindemittel vorgeschlagen, deren Aushärtung *sowohl* radikalisch *als auch* durch Polyaddition (z.B.: Epoxid-Amin) erfolgt. Dies bedeutet, dass derartige Hybridsysteme auf Harzzusammensetzungen basieren, die nach zwei unterschiedlichen Reaktionstypen härtbare Verbindungen enthalten.

So beschreibt die EP 2357162 A1 eine Hybridharzzusammensetzung, die ein radikalisch härtbares Harz und ein Epoxidharz enthält. Der Härter enthält ein aliphatisches Amin und ein Peroxid, insbesondere einen Perester. Ein Nachteil dieser Hybridharzzusammensetzung ist, dass dieses, insbesondere als Zweikomponentensystem, nicht lagerstabil konfektioniert werden kann. Dies wird darauf zurückgeführt, dass die Perester aufgrund ihrer reaktiven Carbonylgruppe schnell mit Aminen reagieren.

Ein Versuch, die Lagerstabilität des zuvor beschriebenen Hybridsystems zu erhöhen, wird in der EP 2796433 A1 dargestellt. Es werden weniger reaktive Peroxide - wie etwa Dialkylperoxide - als Radikalinitiatoren in Kombination mit einer Kupferverbindung als Aktivator vorgeschlagen. Hierdurch soll eine kurzzeitig lagerstabile Kombination von einem Peroxid mit einem Amin erzielt sein. Das eigentlich aktivierende Kupfersalz ist eine einwertige Kupferverbindung. Einwertige Kupfersalze weisen jedoch den Nachteil auf, dass sie leicht durch Luftsauerstoff oxidiert werden. Nachteilig ist weiterhin, dass dieses System immer noch keine ausreichend lange Lagerstabilität gewährleistet.

In der DE 10 2012 219 479 A1 wurde herausgefunden, dass die Lagerstabilitätsprobleme zuvor beschriebener Hybridsysteme gelöst werden können, wenn übliche Zweikomponentensysteme auf Basis radikalisch härtbarer Verbindungen mit Peroxiden als Härtungsmittel und die bekannten Zweikomponentensysteme auf Epoxid-Amin-Basis zu einem Dreikomponentensystem zusammengeführt werden. Dreikomponentensysteme weisen jedoch Nachteile in der Handhabung auf.

Aldimine bzw. Ketimine sind Kondensationsprodukte aus primären Aminen und Aldehyden bzw. Ketonen. Bei Kontakt mit Wasser können derartige Imine zu den entsprechenden Aminen und Aldehyden bzw. Ketonen hydrolysieren. Darum können sie als geschützte Form von Aminen bzw. von Aldehyden oder Ketonen, verwendet werden. So werden Aldimine oft in der Polyurethanchemie oder Epoxidchemie eingesetzt, wo sie als durch Feuchtigkeit aktivierbare Vernetzer ("blockierte Amine" oder "latente Härter") für Isocyanatgruppen bzw. Epoxygruppen aufweisende Zusammensetzungen dienen und so eine Aushärtung nach dem Prinzip der Polyaddition ermöglichen. Beispiele für derartige Anwendungen finden sich in EP 1 329 469 A1, EP 1 975 190 A1 und EP 2 017 260.

WO 2016/206777 A1, US 2011/201726 A1, US 2016/039960 A1, US 2012/220736 A1, US 2012/270961 A1 und US 2011/253309 A1 beschreiben weitere Harzzusammensetzungen und Harzsysteme.

Allen Hybridsystemen des Standes der Technik ist die Verwendung von Peroxiden als Radikalinitiatoren für die Polymerisation der radikalisch härtbaren Verbindung gemeinsam. Diese sind jedoch thermisch sensibel und reagieren empfindlich auf Verunreinigungen. Dies führt zu erheblichen Einschränkungen bei der Formulierung von Härterzusammensetzungen eines Zweikomponentensystems für ein Hybridbindemittel hinsichtlich Lagertemperatur, Lagerstabilität, Konfektionierung und der Auswahl geeigneter Bestandteile. Um die Verwendung von Peroxiden zu ermöglichen, werden außerdem zu deren Stabilisierung Phlegmatisierungsmittel, wie Phthalate, zugegeben. Diese wirken als Weichmacher und können damit signifikant die mechanische Festigkeit des Hybridsystems beeinträchtigen.

Auch aufgrund ökologischer Erfordernisse und beispielsweise der Tatsache, dass Peroxide in vielen Ländern ab einer bestimmten Konzentration als umweltgefährdend und sensibilisierend gekennzeichnet werden müssen (z.B.: bei Dibenzoylperoxid ab 1 %), ist es außerdem anzustreben, derartige Initiatoren zu meiden.

Somit bestand die Aufgabe, eine Hybridharzzusammensetzung bereit zu stellen, welche die oben erwähnten Nachteile der Systeme aus dem Stand der Technik nicht aufweist, welche insbesondere kalthärtend ist (zwischen - 10 °C und + 60 °C) und auch als lagerstabiles Zweikomponentensystem konfektioniert werden kann.

Die Erfinder haben überraschend herausgefunden, dass dies erreicht werden kann, indem für das eingangs beschriebene Hybridbindemittel neue, peroxidfreie Initiatoren in Form von Iminen (Aldimine und/oder Ketimine und/oder deren Vorstufen wie unten dargelegt) für die Polymerisation der radikalisch härtbaren Verbindung verwendet werden.

Die Erfinder haben weiterhin herausgefunden, dass sich diese Initiatoren in Form von Iminen durch Kombination mit Metallsalzen als Aktivatoren derart aktivieren lassen, dass es möglich ist, eine dualhärtende (Reaktions-) Harzzusammensetzung (Hybridharzsystem) bereit zu stellen, die bei Raumtemperatur aushärtet und die, insbesondere als Zweikomponentensystem konfektioniert, lagerstabil ist.

Ein wichtiger Aspekt der Erfindung ist, dass die neuartigen Radikalinitiatoren in Form von Iminen aus Aminen und Aldehyden synthetisiert werden und dadurch per se eine außerordentliche Stabilität, insbesondere gegenüber den für die Polyaddition oft verwendeten Aminen aufweisen. Dies ermöglicht insbesondere peroxidfreie und lagerstabile Hybridbindemittelsysteme für die chemische Befestigungstechnik, welche mit gängigen Auspressgeräten handhabbar sind.

Die Erfindung betrifft ein mehrkomponentiges Hybridharzsystem für die chemische Befestigungstechnik, insbesondere zum Befestigungen von Verankerungsmitteln in Lochern Oder Spalten, welches in einem Reaktionsharzbestandteil (A) ein Reaktionsharz auf Basis radikalisch polymerisierbarer ungesättigter Verbindungen und ein Reaktionsharz, welches durch Polyaddition mit einem Amin reagieren kann, beinhaltet, weiter räumlich getrennt davon vor der Anwendung, um eine Reaktion vor dem Vermischen der Komponenten (A) und (H) vor dem Vermischen zu verhindern, beinhaltend peroxidfreie Initiatoren in Form von ein Oder mehreren Iminen für die Polymerisation des radikalisch polymerisierbaren Reaktionsharzes und mindestens ein Amin in einem Härterbestandteil (H); sowie Metallsalze als Aktivator.

In einer weiteren Ausführungsform betrifft die Erfindung auch die Verwendung eines Hybridharzsystems als Klebstoff, Beschichtungsstoff oder Formmasse, insbesondere im Befestigungsbereich oder -wesen, hier in erster Linie zur Befestigung von Verankerungsmitteln in (Bau-)Substraten, wie Mauerwerk oder Beton, oder ferner zur Befestigung von Fasern, Gelegen, Geweben oder Composites zur Verstärkung von Bauwerken. Die Verwendung erfolgt insbesondere in Form eines Mehr-, wie Zwei-Komponentenkits. Auch entsprechende Verfahren oder Methoden insbesondere zum Befestigen von Verankerungselementen (Verankerungsmitteln) in Löchern oder Spalten, bei denen ein erfindungsgemäßes Hybridharzsystem zum Einmörteln (Einkleben) von Verankerungsmitteln verwendet wird, wobei das Hybridharzsystem und ein Verankerungsmittel nacheinander, insbesondere zuerst das Hybridharzsystem, dann das Verankerungsmittel, oder (mindestens im wesentlichen) gleichzeitig, in ein Loch oder einen Spalt in einem Substrat (auch in einem gerissenen Substrat, wie in gerissenem Beton) eingebracht werden, oder Mischformen dieser beiden Varianten mit jeweils teilweisem Einbringen, bilden eine Ausführungsform der Erfindung.

Auch entsprechende Verfahren oder Methoden zur Befestigung von Fasern, Gelegen, Geweben oder Composites zur Verstärkung von Bauwerken, bei denen ein erfindungsgemäßes Hybridharzsystem als Befestigungsmittel (Kleber) verwendet wird, sind eine Ausführungsform der Erfindung.

Ausführungsformen der Erfindung finden sich auch in den Ansprüchen, die hier durch Bezugnahme aufgenommen werden, wobei die Unteransprüche bevorzugte Erfindungsverkörperungen bedeuten. Auch die Beispiele betreffen bevorzugte Ausführungsformen.

Die Erfindung betrifft vor diesem Hintergrund ein Hybridharzsystem, insbesondere für die Befestigungstechnik, umfassend
einen Reaktionsharzbestandteil (A), der
mindestens eine Verbindung (a1), die radikalisch polymerisieren kann,
mindestens eine Verbindung (a2), durch Polyaddition, die mit einem Amin reagieren kann,
und optional eine verbrückende Verbindung (a3) mit mindestens zwei Funktionalitäten, wovon eine radikalisch (co)polymerisieren und eine mit einem Amin durch Polyaddition reagieren kann, enthält,
   und einen Härterbestandteil (H), der
mindestens ein Imin (h1) und
mindestens ein Amin (h2),
und optional eine verbrückende Verbindung (h3) die sowohl mindestens eine Iminals auch mindestens eine Amin-Funktionalität trägt, enthält,
wobei der Harzbestandteil (A) und/oder der Härterbestandteil (H) weiterhin mindestens ein Metallsalz als Aktivator beinhaltet.

Der Harzbestandteil (A) und der Härterbestandteil (H) liegen hierbei vor der Anwendung (z.B. bei Lagerung und Transport) räumlich getrennt voneinander vor, um eine Reaktion vor dem Vermischen dieser Komponenten zu verhindern.

Nachfolgende Erläuterungen dienen zum besseren Verständnis der Erfindung und der darin verwendeten Terminologien:
Vor- und nachstehend bedeuten Anteils- oder Gehaltsangaben in Prozent jeweils Gewichtsprozent ("Gew.-%") oder den relativen Gewichtsanteil, soweit nicht anders angegeben, bezogen auf alle Inhaltsstoffe eines erfindungsgemäßen Hybridharzsystems (ohne Verpackungsmaterial einschließlich Ampullenwände).

"*Hybridbindemittel*", hierin gleichbedeutend auch als Hybridharz oder dualhärtendes Bindemittel, bezeichnet; ein System, dessen Aushärtung sowohl radikalisch als auch durch Polyaddition erfolgt.

*"kalthärtend'*; die Härtung, hierin auch als Polymerisation bezeichnet, erfolgt bei Raumtemperatur ohne zusätzliche Energiezufuhr, wie etwa Wärme.

"*Polyamin*"; eine gesättigte Verbindung, deren Rückgrat von einer variierenden Anzahl an sekundärer Aminogruppen (-NH-) unterbrochen ist. Die Verbindung kann sowohl offenkettig als auch cyclisch sein, wobei bei den offenkettigen Verbindungen sich an den Kettenenden primäre Aminogruppen befinden.

"*Härter*"; Verbindungen, welche die Polymerisation der Reaktionsharze bewirken. "*Epoxidäquivalent*", hierin gleichbedeutend mit Epoxidäquivalentgewicht verwendet; das Epoxidäquivalentgewicht entspricht dem Kehrwert aus dem Epoxidwert. Der Epoxidwert entspricht der Anzahl der Mole der Epoxidgruppen in 100 g Harz.

"*Beinhalten*" oder "*umfassen*" bedeutet, dass neben den genannten Bestandteilen noch andere vorhanden sein können, steht also für eine nicht abschließende Aufzählung, im Gegensatz zu "bestehen aus", das eine abschließende Aufzählung der bei seiner Verwendung aufgezählten Bestandteile bedeutet. Vorzugsweise kann anstelle von "beinhalten" ""bestehen aus" eingesetzt werden.

Wo "*(Meth)acrylate*" oder -"*(meth)acrylate"* erwähnt werden, bedeutet dies Acrylate, Methacrylate oder Mischungen davon.

Das Präfix *"Hetero-"* bedeutet vorzugsweise, dass ein oder mehrere Kohlenstoffatome unabhängig voneinander durch Heteroatome, z.B. durch 1 bis 3 Heteroatome (beispielsweise ausgewählt aus O, N, wie NH oder N-Alkyl, S und Si), ersetzt sind.

Wo von *"substituiert"* oder von *"Substituent"* die Rede ist, bezeichnet dies ein Atom oder eine Atomgruppe (beispielsweise Hydroxy), welche(s) in einem Molekül ein Wasserstoffatom ersetzt. Der und/oder die Substituenten (im Falle von "substituiert) können sich entlang der Hauptkette und/oder bei Verzweigungen entlang der Seitenkette befinden. Gewichtsanteile beziehen sich, wenn nichts anderes angegeben ist, auf die Hybridharzsysteme insgesamt mit allen Bestandteilen.

In allen Ausführungsformen der Erfindung ist vorzugsweise auf jeglichen Zusatz (Beimischen) von Initiatoren aus dem Stand der Technik, insbesondere Peroxiden als solchen, Aziden, Azoverbindungen, Photoinitiatoren und für ATRP-typische halogenhaltige Verbindungen/Initiatoren als Radikalstarter verzichtet, d.h. die Erfindungsgegenstände kommen ohne solche Verbindungen aus (sie sind frei davon). Dabei ist nicht ausgeschlossen, dass z.B. vereinzelt Peroxide während der Lagerung oder der Reaktion beiläufig entstehen (beispielsweise auch durch Umsetzung mit Luftsauerstoff), doch erfolgt kein aktiver Zusatz "von außen".

Beispiele solcher nicht zuzusetzender Peroxide sind Alkylhydroperoxide, Dialkylperoxide, Peracetale, Perketale, Persäuren, Aldehydperoxide und Ketonperoxide, Peroxycarbonate, Peroxyester, Diacylperoxide, und dergleichen mehr, z.B wie in WO 2007/042199 und US 2002/0091214 genannt. Als Azoverbindung sei hier beispielhaft AIBN erwähnt. Als halogenhaltige Initiatoren, welche üblicherweise im ATRP-Verfahren eingesetzt werden, sind beispielsweise Alkylhalogenide (wie z.B.: α-Bromisobuttersäure-ethylester) und Sulfonsäurehalogenide (wie z.B.: p-Toluolsulfonsäurechlorid) zu nennen.

Bei den Aktivatoren in Form eines Metallsalzes, was auch Metallkomplexe und Metalloxide einschließt, handelt es sich vorzugsweise um ein oder mehrere Metallsalze oder insbesondere um ein oder mehrere Salze von organischen und/oder anorganischen Säuren mit Metallen, z.B. ausgewählt aus Kupfer, Eisen, Vanadium, Mangan, Cer, Kobalt, Zirkonium und Wismut, oder Gemischen von zwei oder mehr davon. Insbesondere sind die Metallsalze aus der Gruppe ausgewählt, die aus Kupfer, Eisen, Mangan, Kobalt und Vanadium besteht. Bevorzugte Metallsalze mit anorganischen Säureresten sind Sulfate, Nitrate und Chloride, um nur einige Beispiele zu nennen. Bei den bevorzugten Metallsalzen mit organischen Säureresten handelt es sich insbesondere um Carboxylate, wie Octoate, Naphthenate, Acetate, Tartrate, Gluconate, Butyrate, um auch hier nur einige Beispiele zu nennen, insbesondere Mangancarboxylate, wie Mn-acetat oder Mn-octoat, Kupfercarboxylate, wie Kupferoctoat oder Kupfernaphthenat, Kupferchinolate, Eisencarboxylate, wie Eisenoctoat und/oder Vanadiumcarboxylate beinhaltet sind. Die vorgenannten Beispiele sollen den Umfang weiterer möglicher Metallsalze nicht limitieren, sondern lediglich einige Beispielverbindungen zur Verdeutlichung aufzeigen.

Solche Aktivatoren sind bekannt oder nach an sich bekannten Verfahren herstellbar und liegen vorzugsweise in einem Anteil von 0,001 bis 20, z.B. 0,1 bis 5 Gew.-%, vor.

Ein Imin (h1) des Härterbestandteils (H) ist vorzugsweise eine Verbindung, welche ein oder mehrere Imin-Strukturinkremente der Formel (I) beinhaltet: 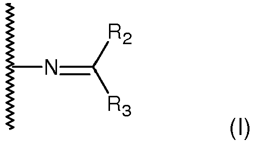 worin unabhängig voneinander:
die gewellte Linie den organischen Rest des (jeweils) verwendeten Amins oder der verwendeten Amine darstellt; und
R₂ und R₃ unabhängig voneinander Wasserstoff und/oder einen unsubstituierten oder substituierten, gegebenenfalls Doppelbindungen und/oder Heteroatome aufweisenden, ein- oder mehrfach verzweigten oder geradkettigen organischen Rest, welcher mindestens eine aliphatische, heteroaliphatische, alicyclische oder heterocyclische Molekülstruktur, oder eine Kombination von zwei oder mehr der vorgenannten Molekülstrukturen beinhaltet, bedeutet; und/oder Salze davon.

Vorzugsweise liegt das Molekulargewicht der Imine (h1) bei 3000 Dalton (g/mol) oder niedriger, beispielsweise bei 1000 Dalton oder niedriger.

Das oder die erfndungsgemäßen Imine (h1) (was auch die Vorstufen [Amin(e); Aldehyde und/oder Ketone] beinhaltet) sind bekannt oder nach an sich bekannten Verfahren herstellbar bzw. werden vorzugsweise danach erhalten. Die Imine können vor der Anwendung oder auch erst "in situ" erhalten werden. Mögliche erfindungsgemäße Verfahren hierfür sind (i) die separate vorherige Herstellung, (ii) die "in situ" Herstellung, bei der der Aldehyd/Keton und das primäre Amin auf unterschiedliche Komponenten des Befestigungssystems aufgeteilt werden und beispielsweise am Ort der Anwendung vermischt werden und (iii) die "in situ" Herstellung in einer Komponente des Befestigungssystems, bei der der Aldehyd/Keton und das primäre Amin bei der Zubereitung der jeweiligen Komponente gemeinsam vermischt werden. Insbesondere die Imine gemäß (i) werden durch Kondensation unter Abspaltung von Wasser aus ein oder mehreren Aminen mit einem oder mehreren Aldehyden/Ketonen erhalten. Entsprechende Reaktionsbedingungen für die separate vorherige Umsetzung (i) sind dem Fachmann bekannt.

Das zur Härtung des Harzes (a2) als solches zugesetzte mindestens eine Amin (h2) ist zweckmäßig ein primäres und/oder sekundäres Mono-, Di- oder Polyamin. Das Amin kann sowohl linear als auch verzweigt sein. Das Amin-Molekülgerüst kann aliphatische, heteroaliphatische, alicyclische, heterocyclische, aromatische, aliphatisch-aromatische und Silan/ Siloxan-Molekülstrukturen oder zwei oder mehr unabhängig ausgewählt davon enthalten. Im Molekül können primäre und/oder sekundäre und/oder tertiäre Aminogruppen vorhanden sein. Weiterhin kann das mindestens eine Amin (h2) aus der Gruppe der Aminoamide, Polyaminoamide, Mannich-Basen und der Amin-Addukte (Epoxid-Amin-Addukte wie beispielsweise in EP 0 387 418 A2 beschrieben, Isocyanat-Amin-Addukte, Bucherer-Addukte und Michael-Additions-Addukte) ausgewählt sein.

Geeignete Amine, ohne den Umfang der Erfindung einzuschränken, sind beispielsweise aus der Gruppe der Alkylamine (wie z.B.: 1,2-Diaminoethan, 2-Methylpentandiamin, 2,2-Dimethyl-1,3-propandiamin, Diethylaminopropylamin, 2,2,4- oder 2,4,4-Trimethylhexamethylendiamin), der Heteroalkylamine (wie beispielsweise 1,13-Diamino-4,7,10-trioxatridecan, kommerziell erhältliche aminfunktionalisierte Polyoxyalkylene [Jeffamine] der Firma Huntsman Corp, oder Dimethylaminopropylaminopropylamin, oder z.B.: Triethylentetramin und/oder höhere Homologe), der Cycloalkylamine (wie z.B.: Isophorondiamin, 1,3- und/oder 1,4-Bisaminomethylcyclohexan, TCD-Diamin, 1,2- und 1,4-Diaminocyclohexan, Bis(4-aminocyclohexyl)methan, Bis(4-amino-3-methylcyclohexyl)methan, Norbornandiamin, Diaminodicyclohexylmethan, 2,2-Bis(4-aminocyclohexyl)propan), der Heterocyloalkylamine (wie z.B.: Aminoethylpiperazin) und der aliphatisch-aromatischen Amine (wie 1,3- oder 1,4-Benzoldimethanamin), ausgewählt, oder es handelt sich um Gemische von zwei oder mehr dieser Verbindungen.

Bevorzugte Amine sind 2-Methylpentandiamin (DYTEK A), 1,2-Diaminocyclohexan (DCH), 1-Amino-3-aminomethyl-3,5,5-trimethylcyclohexan (IPDA), 1,3-Benzoldimethanamin (MXDA), 1,4-Benzoldimethanamin (PXDA), 1,6-Diamino-2,2,4-trimethylhexan (TMD), Triethylentetramin (TETA), Tetraethylenpentamin (TEPA), Pentaethylenhexamin (PEHA), N-Aminoethylpiperazin (AEP), 1,3-Bis(aminomethyl)cyclohexan (1,3-BAC), TCD-Diamin, Jeffamine der Firma Huntsman, Dipropylentriamin, N,N'-Dicyclohexyl-1,6-hexandiamin, N,N'-Dimethyl-1,3-diaminopropan, N,N'-Diethyl-1,3-diaminopropan, N,N-Dimethyl-1,3-diaminopropan, sekundäre Polyoxypropylendi- und triamine, 2,5-Diamino-2,5-dimethylhexan, Bis-(aminomethyl)tricyclopentadien, 1,8-Diamino-p-menthan, Bis-(4-amino-3,5-dimethylcyclohexyl)methan, oder Gemische von zwei oder mehr dieser Verbindungen.

Als Amine besonders interessant sind auch Aminoalkylsilane, die mindestens eine hydrolysierbare Gruppe, wie Alkoxy, z.B. Methoxy oder Ethoxy - am Silicium gebunden - beinhalten. Diese können (durch beispielsweise entstehendes Reaktionswasser oder zugeführtes Wasser) hydrolysieren und kondensieren und so Oligomere bilden, die mehrere Aminogruppen tragen und die REACH-Definition für Polymere erfüllen. Bevorzugte derartige Aminoalkylsilane sind beispielsweise ausgewählt aus der Gruppe, die ein oder mehrere der folgenden Verbindungen umfasst: Aminoalkyltri- oder -dialkoxysilane, wie 3-Aminopropyltrimethoxysilan oder 3-Aminopropyltriethoxysilan, und N-(Aminoalkyl)-amino-alkyltri- oder -dialkoxysilane, wie N-(2-Aminoethyl)-3-aminopropyltrimethoxysilan oder N-(2-Aminoethyl)-3-aminopropylmethyldimethoxysilan.

Die vorgenannten Beispiele für das Amin (h2) des Härterbestandteils (H) sind auch zur Synthese der Imine (h1) verwendbar. Bevorzugt enthalten die für die Synthese der Imine (h1) verwendbaren Amine jedoch mindestens eine primäre Aminogruppe (-NH₂) zur Ausbildung des Aldimins bzw. Ketimins.

In einer weiteren besonderen Ausführungsform der Erfindung können als Amine für die Synthese der Imine aminosilanisierte Füllstoffe, die primäre Aminogruppen tragen, wie aminosilanbehandeltes Quarzmehl (z.B Silbond AST® der Fa. Quarzwerke GmbH), aminosilanbehandelte Kieselerde (z.B. Aktisil AM® von Hoffmann Mineral), oder aminosilanbehandelte pyrogene Kieselsäuren, vorgesehen und beinhaltet sein.

Es können auch Mischungen von zwei oder mehr der genannten Amine (h2) und/oder Imine (h1) verwendet werden bzw. beinhaltet sein.

Bei den als solche (als Ketimin- oder Aldiminvorstufen) zugesetzten oder zur Synthese der Imine geeigneten Aldehyden und Ketonen handelt es sich insbesondere um solche der Formel (II): 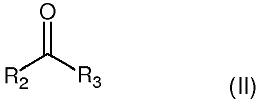 worin:
R₂, R₃ unabhängig voneinander Wasserstoff und/oder einen unsubstituierten oder substituierten und/oder einen gegebenenfalls Doppelbindungen und/oder Heteroatome aufweisenden ein- oder mehrfach verzweigten oder geradkettigen organischen Rest, welcher aliphatische, heteroaliphatische, alicyclische, heterocyclische Molekülstrukturen und/oder Kombinationen aus den vorgenannten Molekülstrukturen umfassen kann, bedeutet.

Bevorzugt handelt es sich bei den Aldehyden und/oder Ketonen um Verbindungen, welche mindestens ein oder mehrere (primäre und/oder sekundäre) Wasserstoffatome am zur Carbonylgruppe stehenden α-Kohlenstoffatom aufweisen. Beispiele derartiger Aldehyde sind Propanal, Valeraldehyd, Isovaleraldehyd, oder Methoxyacetaldehyd, oder 3,7-Dimethyl-6-octenal (Citronellal) oder 3,7-Dimethyl-7-hydroxyoctanal (Hydroxycitronellal). Als derartige Ketone seien hier beispielhaft auch Methylisobutylketon, Aceton, oder Methylethylketon oder 6-Methyl-5-hepten-2-on erwähnt.

Besonders bevorzugt handelt es sich bei den Aldehyden und/oder Ketonen um Verbindungen, welche am zur Carbonylgruppe stehenden α-Kohlenstoffatom eine Doppelbindung und/oder Verzweigung aufweisen. Hierdurch weisen die besonders bevorzugten Aldehyde und/oder Ketone nur noch ein (tertiäres) Wasserstoffatom am zur Carbonylgruppe stehenden α-Kohlenstoffatom auf. Beispiele besonders bevorzugter Aldehyde sind Isobutyraldehyd, 2-Ethylhexanal, 2-Methylbutanal, 2-Ethylbutanal, 2-Methylvaleraldehyd, 2,3-Dimethylvaleraldehyd, Cyclohexylcarboxaldehyd, oder 3,7-Dimethyl-2,6-octadienal (Citral), 3-(4-tert-Butylphenyl)-2-methylpropanal (Lilial, Lysmeral), Tetrahydrofuran-3-carboxaldehyd, Tetrahydro-2-furancarboxaldehyd, 4-Formyltetrahydropyran, Tetrahydro-2H-pyran-2-carbaldehyd oder Tetrahydro-pyran-3-carbaldehyd. Als besonders bevorzugte Ketone seien hier beispielhaft Diisopropylketon, 3-Methyl-2-pentanon, 2-Methylcyclohexanon oder ß-Ionone genannt.

Die vorgenannten Beispiele für bevorzugte und besonders bevorzugte Aldehyde und/oder Ketone sollen den Umfang geeigneter Aldehyde und/oder Ketone nicht limitieren, sondern lediglich einige Beispielverbindungen mit den oben genannten, als bevorzugt und als besonders bevorzugt definierten, Strukturmerkmalen zur Veranschaulichung aufzeigen. Es können auch zwei oder mehr der genannten Ketone und/oder Aldehyde als Gemisch vorhanden sein.

Beispiele für geeignete Amine und Aldehyde oder Ketone finden sich insbesondere in der DE 10 2004 035 542 A1, EP 1 329 469 A1, EP 1 975 190 A1 und der EP 2 017 260, die hier bezüglich der darin allgemein und speziell genannten Amine, Aldehyde, Ketone, Aldimine und Ketimine durch Bezugnahme aufgenommen werden.

Der Härterbestandteil (H) der erfindungsgemäßen Reaktionsharzzusammensetzung umfasst optional eine verbrückende Verbindung (h3), die sowohl mindestens eine Imin- als auch mindestens eine Amin-Funktionalität trägt. Die Imin-Funktionalität dient hierbei in Kombination mit dem Metallsalz als Initiator für die Härtung der radikalisch polymerisierbaren Verbindung (a1). Die Amin-Funktionalität der verbrückenden Verbindung (h3) ist als Härter für das durch Polyaddition härtbare Harz (a2) anzusehen. Bevorzugt handelt es sich bei der Imin-Funktionalität der verbrückenden Verbindung (h3) um ein Imin-Strukturinkrement der Formel I. Die Amin-Funtkionalität kann sowohl eine primäre, als auch eine sekundäre Aminogruppe sein. Erfindungsgemäße Möglichkeiten zum Erhalt der verbrückenden Verbindung (h3) sind (j) die Reaktion eines Amins, welches primäre und sekundäre Aminogruppen trägt, mit einem Aldehyd der Formel II (hierdurch reagieren die primären Aminogruppen zum Imin und die sekundären Aminogruppen bleiben erhalten), (jj) die Reaktion eines Amins, welches zwei oder mehr primäre Aminogruppen trägt, mit einem Aldehyd der Formel II, wobei dieser im stöchiometrischen Unterschuss vorliegt (hierdurch liegen statistisch verteilt Moleküle, welche eine Imin- und eine [primäre]Amin-Funktionalität tragen, vor) und (jjj) Kombinationen aus den vorgenannten möglichen Verfahren. Die Synthese der verbrückenden Verbindung (h3) an sich, kann insbesondere gemäß den Verfahren (i) bis (iii) erfolgen. Als Amine des Verfahrens (j), welche sowohl mindestens eine primäre, als auch mindestens eine sekundäre Aminogruppe tragen, seien hier beispielhaft N-Aminoethylpiperazin (AEP), Dimethylaminopropylaminopropylamin (DMAPAPA), Diethylentriamin (DETA), sowie dessen höhere Homologe erwähnt. In den Verfahren (jj) und (jjj) sind die Amine (h2) verwendbar.

Vorzugsweise liegt das Molekulargewicht der verbrückenden Verbindung (h3) bei 2500 Dalton (g/mol) oder niedriger, beispielsweise bei 500 Dalton oder niedriger.

Der Gewichtsanteil dieses oder dieser Härter ((h1) und/oder (h2) und/oder optional (h3)) und/oder den möglichen Aldimin-Vorstufen liegt vorzugsweise im Bereich von 0,01 bis 50 Gew.-%, z.B. zwischen 0,5 und 40 Gew.-% oder zwischen 1 und 30 Gew.-% oder insbesondere von 0,1 bis 40, beispielsweise 0,5 bis 30 Gew.-%.

Bei der (mindestens einen) Verbindung (a1), die radikalisch polymerisieren kann, als Bestandteil des Harzbestandteils (A) (auch als Reaktionsharz (a1) zu bezeichnen) handelt es sich um eine nur oder mindestens auch nichtaromatische ungesättigte Gruppen beinhaltende Verbindung, vorzugsweise um ein radikalisch härtendes ungesättigtes Reaktionsharz mit bevorzugt mindestens 2 oder mehr reaktiven nichtaromatischen ungesättigten Bindungen, oder eine Mischung von zwei oder mehr Reaktionsharzen.

Besonders geeignet ist die Gruppe der ethylenisch ungesättigten Verbindungen, die Styrol und Derivate; Vinylester, wie (Meth)Acrylate, Urethan(meth)acrylate oder Itaconate, oder Epoxy(meth)acrylate; ferner ungesättigte Polyester, Vinylether, Allylether, Dicyclopentadien-Verbindungen und ungesättigte Fette, umfasst.

Besonders bevorzugt sind vor allem ein oder mehrere solche Reaktionsharze, die (radikalisch) härtbare Ester mit ein oder mehreren ungesättigten Carbonsäureresten (wie beispielsweise in DE 10 2014 103 923 A1 beschrieben) umfassen; vorzugsweise jeweils propoxylierte oder insbesondere ethoxylierte aromatische Diol-, wie Bisphenol-A-, Bisphenol-F- oder Novolak-(insbesondere di-) (meth)acrylate (hier zu den Vinylestern gehörend); Epoxy(meth)acrylate, insbesondere in Form von Umsetzungs-produkten von Di- oder Polyepoxiden, z.B. Bisphenol-A-, Bisphenol-F- oder Novolak-di- und/oder -polyglycidylethern, mit ungesättigten Carbonsäuren, z.B. C₂-C₇-Alkencarbonsäuren, wie insbesondere (Meth)acrylsäure (hier zu den Vinylestern gehörend); Urethan- und/oder Harnstoff(meth)acrylate - insbesondere Urethan(meth)acrylate, die z.B. durch Umsetzung von Di- und/oder Polyisocyanaten (höherfunktionelle Isocyanate) mit geeigneten (Meth)Acrylverbindungen (wie z.B.: Hydroxyethyl- oder Hydroxypropyl(meth)acrylat), gegebenenfalls unter Mitwirkung von Hydroxyverbindungen, die mindestens zwei Hydroxylgruppen enthalten, wie sie beispielsweise in der DE 39 40 309 A1 und/oder DE 4111828 A1 beschrieben sind, erhalten werden; oder ungesättigte Polyester¬harze, oder dergleichen, oder zwei oder mehr dieser härtbaren ungesättigten organischen Reaktionsharze. Besonders Vinylesterharze sind aufgrund ihrer hydrolytischen Beständigkeit und ihrer ausgezeichneten mechanischen Eigenschaften bevorzugt. Erfindungsgemäß sind Vinylesterharze Oligomere, Präpolymere oder Polymere mit mindestens einer (Meth)Acrylatgruppe. Weiterhin kann das Reaktionsharz (a1) noch andere reaktive Gruppen bzw. Verbindungen, die mit einem Radikalinitiator polymerisiert werden können, enthalten. Beispielsweise reaktive Gruppen, die von der Itaconsäure, Citraconsäure und allylischen Gruppen und dergleichen abgeleitet sind.

Der Gewichtsanteil des Reaktionsharzes (a1) liegt vorzugsweise im Bereich von 0,1 bis 80 Gew.-%, z.B. zwischen 0,5 und 75 Gew.-% oder zwischen 1 und 40 Gew.-% oder insbesondere von 5 bis 60, beispielsweise 20 bis 50 Gew.-%.

Bei der (mindestens einen) Verbindung (a2) als Bestandteil des Harzbestandteils (A), die mit einem Amin reagieren kann (auch als Reaktionsharz (a2) zu bezeichnen), handelt es sich insbesondere um ein Epoxidharz und/oder ein Harz, welches cyclische Carbonatgruppen beinhaltet. Als Epoxidharz kommt eine Vielzahl der hierfür dem Fachmann bekannten und kommerziell erhältlichen Verbindungen in Betracht. Insbesondere sind dies Glycidylverbindungen, die im Mittel mehr als eine Glycidylgruppenfunktionalität, vorzugsweise zwei Glycidylgruppen, pro Molekül enthalten. Die Glycidylverbindungen (Epoxidharze) können dabei sowohl gesättigt als auch ungesättigt sowie aliphatisch, alicyclisch, aromatisch oder heterocyclisch sein und auch Hydroxylgruppen aufweisen. Sie können weiterhin Substituenten enthalten, die unter den Mischungs- oder Reaktionsbedingungen keine störenden Nebenreaktionen verursachen, wie beispielsweise Alkyl- oder Arylsubstituenten, Ethergruppen und ähnliche. Als Verbindung (a2) sind auch trimere und tetramere Epoxide geeignet. Geeignete Epoxidharze sind z.B. in Lee, Neville, Handbook of Epoxy Resins 1967, beschrieben. Vorzugsweise handelt es sich bei den Epoxiden um Glycidylether von mindestens einem mehrwertigen Alkohol oder Phenol, wie Novolak, Bisphenol, Resorcin, Hydrochinon, 4,4'-Dihydroxyphenylcyclohexan, 4,4'-Dihydroxy-3,3'-dimethyldiphenylpropan, oder Gemische solcher Epoxide, beispielsweise erhältlich durch Umsetzung der entsprechenden mehrwertigen Alkohole mit Epichlorhydrin. Beispiele sind Trimethylolpropantriglycidylether, Novolak-Epoxidharze, Bisphenol-A-Epichlorhydrinharze und/oder Bisphenol-F-Epichlorhydrinharze, beispielsweise mit einem durchschnittlichen Molekulargewicht von ≤ 2000. Die Epoxidharze können beispielsweise ein Epoxidäquivalent von 120 bis 2000, vorzugsweise 150 bis 400, wie insbesondere 155 bis 195, beispielsweise 165 bis 185 aufweisen. Möglich sind auch Gemische von zwei oder mehr solcher Epoxidharze. Als Harz, welches cyclische Carbonatgruppen beinhaltet, sind besonders solche Harze geeignet, die z.B. durch Umsetzung von di- und/oder höherfunktionellen Isocyanaten mit geeigneten Hydroxygruppen tragenden monofunktionellen cyclischen Carbonatharzen (wie beispielsweise Gylcerincarbonat), erhalten werden. Gegebenenfalls werden die cyclischen Carbonatgruppen tragenden Harze unter Mitwirkung von weiteren Hydroxyverbindungen, die mindestens zwei Hydroxylgruppen enthalten, erhalten. Es sei auf die DE 10 2015 113 351 A1 verwiesen, die hier durch Bezugnahme aufgenommen wird.

Der Anteil des Reaktionsharzes (a2) an der Gesamtmasse des Hybridharzsystems beträgt vorzugsweise 0,1 bis unter 80 Gew.-%, insbesondere 5 bis 75 Gew.-%, 5 bis 70 Gew.-% oder 5 bis 50 Gew.-%.

Die Harzkomponente (A) der erfindungsgemäßen Reaktionsharzzusammensetzung umfasst optional eine verbrückende Verbindung (a3), die mindestens zwei reaktive funktionelle Gruppen aufweist, wovon eine radikalisch (co)polymerisieren und eine mit einem Amin reagieren kann. Bevorzugt enthält die verbrückende Verbindung (a3) eine radikalisch härtbare funktionelle Gruppe ausgewählt unter einer (Meth)Acrylat-, Vinylether-, Vinylester- und Allylethergruppe, wobei eine Methacrylatgruppe stärker bevorzugt ist. Bevorzugt enthält die verbrückende Verbindung (a3) weiterhin ein Isocyanat, ein Epoxid, ein Acetoacetat, oder ein cyclisches Carbonat als funktionelle Gruppe, die mit einem Amin reagieren kann. Stärker bevorzugt ist ein Epoxid in Form eines Glycidylethers und/oder ein cyclisches Carbonat.

Als Beispiel für eine verbrückende Verbindung (a3) sei hier Glycidylmethacrylat erwähnt. Als besonders bevorzugte verbrückende Verbindung (a3), welche sowohl eine Methacrylatgruppe als auch eine cyclische Carbonatgruppe trägt, sind hier Harze nennen, die z.B. durch Umsetzung von di- und/oder höherfunktionellen Isocyanaten mit geeigneten Hydroxyverbindungen erhalten werden. Geeignete Hydroxyverbindungen sind beispielsweise Hydroxypropylmethacrylat und Glycerincarbonat.

Wichtige Beispiele für weitere (insbesondere im Befestigungsbereich übliche) Inhaltsstoffe sind Co-Beschleuniger, Inhibitoren, reaktive Verdünner, Thixotropiermittel, Füllstoffe und/oder weitere Additive.

Als Co-Beschleuniger können aminische Co-Beschleuniger in Frage kommen, wie insbesondere (vorzugsweise tertiäre, insbesondere hydroxyalkylaminogruppensubstituierte) aromatische Amine ausgewählt aus der Gruppe, die epoxyalkylierte Aniline, Toluidine oder Xylidine, wie z.B. ethoxyliertes Toluidin, Anilin oder Xylidin, wie N,N-Bis(hydroxyethyl)-p-toluidin und ganz besonders auch entsprechend höher alkoxylierte technische Produkte, umfasst. Mischungen von zwei oder mehr Co-Beschleunigern, insbesondere der genannten, sind möglich. Der oder die Co-Beschleuniger haben, vorzugsweise einen Anteil (Konzentration) von 0,005 bis 10, insbesondere von 0,1 bis 5 Gew.-%.

Als Beschleuniger für die Härtung der Verbindung (a2) können dem Fachmann an sich bekannte Verbindungen verwendet werden. Beispielhaft wird auf die in der Anmeldung EP 1 674 495 A1 beschriebenen Novolak-Harze hingewiesen, die sich besonders vorteilhaft als Beschleuniger erwiesen haben. Weitere Beschleuniger sind z.B. tert-Amine, wie Imidazole oder tert-Aminophenole, wie 2,4,6-Tris(dimethylaminomethyl)phenol, Bis(dimethylaminomethyl)phenol und 2,4,6-Tris(dimethylamino)phenol, Organophosphine oder Lewis-Basen oder -Säuren, wie Phosphorsäureester, oder Gemische von zwei oder mehr davon. Die Beschleuniger können in einer oder (insbesondere bei Mehrkomponentensystemen) in mehreren der Komponenten, bevorzugt jeweils in einer Härterkomponente, beinhaltet sein, beispielsweise in einem Gewichtanteil von 0,001 bis 30 Gew.-%, bezogen auf die Gesamtmasse der Reaktanden und Zusätze der Reaktionsharzzusammensetzung.

Als Inhibitor sowohl für die Lagerstabilität der radikalisch härtbaren Verbindung (a1) und damit des Harzbestandteils (A) als auch zur Einstellung der Gelzeit sind die für radikalisch polymerisierbare Verbindungen üblicherweise als Inhibitoren verwendeten nicht-phenolischen Verbindungen, wie stabile Radikale und/oder Phenothiazine, geeignet, wie sie dem Fachmann bekannt sind. Phenolische Inhibitoren, wie sie sonst üblicherweise in radikalisch härtbaren Harzzusammensetzungen Verwendung finden, können hier nicht verwendet werden, insbesondere, wenn als Aktivator ein zweiwertiges Kupfersalz verwendet wird, da die Inhibitoren mit dem Kupfersalz reagieren. Dies kann sich nachteilig auf die Lagerstabilität und die Gelzeit auswirken.

Als nicht phenolische oder anaerobe Inhibitoren kommen vorzugsweise Phenothiazine oder andere stabile organische Radikale, wie Galvinoxyl- und N-oxyl-Radikale, in Betracht. Als organische Nitroxylradikale (insbesondere "HALS") können beispielsweise solche aus der DE 199 56 509, insbesondere 1-Oxyl-2,2,6,6-tetramethylpiperidin, 1-Oxyl-2,2,6,6-tetramethylpiperidin-4-ol ("4-OH-TEMPO" oder "TEMPOL"), 1-Oxyl-2,2,6,6-tetramethylpiperidin-4-on (TEMPON), 1-Oxyl-2,2,6,6-tetramethyl-4-carboxyl-piperidin (4-Carboxy-TEMPO), 1-Oxyl-2,2,5,5-tetramethylpyrrolidin, 1-Oxyl-2,2,5,5-tetramethyl-3-carboxylpyrrolidin (3-Carboxy-PROXYL), Aluminium-N-nitrosophenylhydroxylamin, Diethylhydroxylamin vorgesehen sein. Der Gewichtsanteil der nicht-phenolischen Inhibitoren liegt vorzugsweise, bezogen auf die Reaktionsharzformulierung, im Bereich von 1 ppm bis 2 Gew.-%, insbesondere z.B. im Bereich von 10 ppm (gewichtsbezogen) bis 1 Gew.-%.

Die Inhibitoren können, abhängig von den gewünschten Eigenschaften der Reaktionsharzzusammensetzung, entweder alleine oder als Kombination von zweien oder mehreren davon verwendet werden. Die Kombination von phenolischen und von nicht-phenolischen Inhibitoren kann dabei einen synergistischen Effekt ermöglichen, was sich im Wesentlichen in gelzeitdriftfreien Reaktionsharzformulierungen äußert.

Als Thixotropiermittel können übliche thixotropieverursachende Rheologiehilfsmittel verwendet werden, wie pyrogene Kieselsäure, Bentonite, Alkyl- und Methylcellulosen, Rizinusölderivate oder dergleichen, z.B. in einem Gewichtsanteil von 0,01 bis 50 Gew.-%, beispielsweise von 0,1 bis 5 Gew.-%.

Auch weitere Additive können zugesetzt sein, wie Weichmacher (nicht sehr bevorzugt, wenn es z.B. um höhere mechanische Stabilität geht), nicht reaktive Verdünnungsmittel, Silane, Flexibilisatoren, Stabilisatoren, Antistatikmittel, Verdickungsmittel, sonstige Rheologiehilfsmittel, Netz- und Dispergiermittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon. Solche Additive können z.B. insgesamt in Gewichtsanteilen von insgesamt 0 bis 90 Gew.-%, beispielsweise von 0 bis 40 Gew.-%, zugesetzt sein. Sie können in einzelnen oder mehreren Komponenten bei Mehrkomponentensystemen in dem Fachmann ersichtlicher und bekannter Weise zugesetzt sein.

In einer bevorzugten Ausführungsform der Erfindung enthält die Zusammensetzung weitere niederviskose, radikalisch polymerisierbare Verbindungen als Reaktivverdünner für die radikalisch härtbare Verbindung (a1), um deren Viskosität falls erforderlich, anzupassen. Als Reaktivverdünner können ein oder mehrere Verbindungen zugesetzt sein, wie beispielsweise in EP 1 935 860 A1 und DE 195 31 649 A1 beschrieben.

Vorzugsweise enthält das Kunstharz als "reaktive Verdünner" (Meth)acrylsäureester ((Meth)acrylate), der Formel (H₃C oder H)-C(=CH₂)-C(=O)-OX, worin X ein gegebenenfalls substituierter oder mehrfach substituierter Alkylrest ist (einschließlich Hydroxyalkyl(meth)-acrylaten, wie (z.B. 2-)Hydroxypropyl(meth)acrylat oder Hydroxyethyl(meth)acrylat), Alkyl(meth)acrylate mit 1 bis 10 (Meth)acrylatgruppen, wie Mono-, Di-, Tri-, Tetra-, Penta-, Hexa- oder poly(meth)acrylate, z.B. Alkyldi- oder tri(meth)acrylate, wie 1,2-Ethandioldi-(meth)acrylat, 1,3- oder insbesondere 1,4-Butandioldi(meth)acrylat, Hexandioldi(meth)-acrylat, Diethylenglykoldi(meth)acrylat, Trimethylolpropantri(meth)acrylat, Glycerintri(meth)-acrylat, Polyglycerinpoly(meth)acrylat, Polyethylenglykoldi(meth)acrylat, Cycloalkyl-, Bicycloalkyl- oder Heterocycloalkyl(meth)acrylate, worin Cycloalkyl oder Bicycloalkyl 5 bis 7 Ringkohlenstoffatome aufweist und Heterocyclyl 5 oder 6 Ringatome hat und 1 oder 2 Ringheteroatome ausgewählt aus N, O und S aufweist, wie Tetrahydrofurfuryl(meth)acrylat oder Isobornyl(meth)acrylat, oder Acetoacetoxyalkyl(meth)acrylat. Ferner können Styrole, wie Styrol, α-Methylstyrol, Vinyltoluol, tert.-Butylstyrol und/oder Divinylbenzol, oder Gemische von zwei oder mehr davon vorgesehen sein. Der oder die Reaktivverdünner sind beispielsweise in einem Gewichtsanteil von 0,1 bis 90 Gew.-%, z.B. zwischen 0,5 und 75 Gew.-% oder zwischen 1 und 40 Gew.-% zugesetzt.

In einer weiteren bevorzugten Ausführungsform der Erfindung enthält die Zusammensetzung weitere Epoxidfunktionalisierte Verbindungen als Reaktivverdünner für das Reaktionsharz (a2), um dessen Viskosität falls erforderlich, anzupassen. Als Reaktivverdünner finden Glycidylether von aliphatischen, alicyclischen oder aromatischen Mono- oder insbesondere Polyalkoholen Verwendung, wie Monoglycidylether, z.B. o-Kresylglycidylether, und/oder insbesondere Glycidylether mit einer Epoxid-Funktionalität von mindestens 2, wie 1,4-Butandioldiglycidylether, Cyclohexandimethanoldiglycidylether, Hexandioldiglycidylether und/oder insbesondere Tri- oder höhere Glycidylether, z.B. Glycerintriglycidylether, Pentaerythrittetraglycidylether oder Trimethylolpropantriglycidylether, oder Mischungen von zwei oder mehr dieser Reaktivverdünner. Ein bevorzugter Reaktivverdünner ist Trimethylolpropantriglycidylether oder eine Mischung aus 1,4-Butandioldiglycidylether und Trimethylolpropantriglycidylether. Die Reaktivverdünner sind beispielsweise in einem Gewichtsanteil von 0,1 bis 90 Gew.-%, z.B. zwischen 0,5 und 75 Gew.-% oder zwischen 1 und 40 Gew.-% zugesetzt.

Füllstoffe können in einer oder bei Mehrkomponentensystemen in mehreren Komponenten einer erfindungsgemäßen Reaktionsharzzusammensetzung, beispielsweise in Form eines Mehrkomponentenkits, enthalten sein. Ihr Anteil beträgt vorzugsweise 0 bis 80 Gew.-%, beispielsweise 5 bis 80, z.B. 40 bis 70 Gew.-%.

Als Füllstoffe finden übliche Füllstoffe, z.B. hydraulisch härtbare Füllstoffe, wie Gips, Branntkalk, Wassergläser oder insbesondere Zemente, wie Portlandzement oder Tonerdeschmelzzemente; mineralische oder mineralähnliche Füllstoffe, wie Kreiden, Sand, Gesteinsmehle, Quarz, Glas, Quarzmehl, Porzellan, Korund, Keramik, Talkum, Silikate, Tone, Schwerspat, Aluminiumhydroxid, oder dergleichen, die als Pulver, in körniger Form oder in Form von Formkörpern zugesetzt sein können, Verwendung, oder andere, wie beispielsweise in WO 02/079341 und WO 02/079293 genannt (hier diesbezüglich durch Bezugnahme aufgenommen), oder Mischungen von zwei oder mehr davon; wobei die Füllstoffe ferner oder insbesondere auch wie bereits erwähnt oder anderweitig silanisiert sein können.

Als Silane kommen sämtliche monomere Silane und/oder oligomere Siloxane in Betracht, die ein oder mehrere hydrolysierbare Gruppen - am Siliciumatom gebunden - enthalten. Beispielsweise sind dies Methacryloxypropyltrimethoxysilan, Vinyltrimethoxysilan oder Vinyltriethoxysilan, Methyltrimethoxysilan, Tetramethoxysilan, Alkoxypolysilikate (Ester der (Poly)kieselsäure), wie Ethyl- oder Propylpolysilikat, 3-Aminopropyltrimethoxysilan, N-(2-Aminoethyl)-3-aminopropyltrimethoxysilan, 3-Mercaptopropyltrimethoxysilan, 3-Glycidoxypropyltrimethoxysilan um nur einige zu nennen. Die Silane können auch bei der Synthese der Imine zugegen sein, wobei durch das entstehende Reaktionswasser gegebenenfalls Co-Kondensate entstehen.

Der Anteil der Silane liegt vorzugsweise im Bereich von 0,1 bis 20 Gew.%, beispielsweise bei 1 bis 10 Gew.-%, z.B. 2 bis 5 Gew.-%,.

Insbesondere im Falle einer Härterkomponente eines erfindungsgemäßen Mehrkomponentensystems können auch weitere Zusätze Bestandteil des "Härters" sein, wie Wasser, organische Lösungsmittel, wie Benzylalkohol, Füllstoffe (z.B. wie oben genannte) und weitere der oben genannten Additive, beispielsweise in einem Gewichtanteil von insgesamt 0,01 bis 70 Gew.-%, z.B. von 1 bis 40 Gew.-%.

Unter einem Mehrkomponentenkit (oder -set) ist insbesondere ein Zweikomponentenkit (vorzugsweise eine Zwei- oder ferner Mehrkammervorrichtung) zu verstehen, worin die Bestandteile der miteinander reaktionsfähigen Komponenten (A) und (H) so beinhaltet sind, dass sie während der Lagerung nicht zu unerwünschten Reaktionen führen können, also als räumlich voneinander getrennte Komponenten vorliegen. Möglich sind (Zwei- oder Mehrkammer-) Patronen. Besonders geeignet sind Mehrkammerkartuschen, insbesondere Kartuschen mit zwei Komponenten, bei denen der Inhalt nach oder unter Vermischen auf die Anwendungsstelle (insbesondere mittels eines Statikmischers) in Loch oder eine Spalte in einem Substrat (Bausubstrat), vorzugsweise ein Bohrloch, verbracht wird. Entsprechende Verwendungen sind bevorzugt.

In einer möglichen bevorzugten Variante eines erfindungsgemäßen Mehrkomponentenkits stellt der Reaktionsharzbestandteil (A) mit seinen Reaktionsharzen (a1), (a2) und optional (a3) eine erste Komponente K1 und der Härterbestandteil (H) mit seinen Härtern (h1), (h2) und optional (h3) eine zweite Komponente K2 dar. Der Aktivator in Form eines Metallsalzes kann sowohl in Komponente K1, als auch in Komponente K2 beinhaltet sein.

Im Falle der Verwendung von Imin-Vorstufen (mindestens ein Aldehyd und/oder Keton und mindestens ein Amin, welches mindestens eine primäre Aminogruppe trägt) kann beispielsweise der Aldehyd zusammen mit dem Reaktionsharzbestandteil (A) in Komponente K1 und das Amin zusammen mit dem Härterbestandteil (H) in Komponente K2 enthalten sein. Dies würde dem erfindungsgemäßen Verfahren (ii) entsprechen.

Weiterhin kann im Falle der Verwendung von Imin-Vorstufen beispielsweise der Aldehyd und das Amin zusammen mit dem Härterbestandteil (H) in eine Komponente K2 beinhaltet sein. Der Reaktionsharzbestandteil (A) stellt dann die Komponente K1 dar. Dies würde dem erfindungsgemäßen Verfahren (iii) entsprechen. Auch hier kann der Aktivator in Form eines Metallsalzes sowohl in Komponente K1, als auch in Komponente K2 beinhaltet sein.

Vorzugsweise liegt in erfindungsgemäßen Reaktionsharzzusammensetzungen das Verhältnis der Molmengen (n) von Doppelbindungen zu Imingruppen (n (C=C) : n (N=C)) bei 4000 : 1 bis 1 : 10, insbesondere bei 3000 : 1 bis 1 : 2.

### Experimentelles

### Auszugsversuche aus Beton

Für Auszugsversuche mit Gewindestangen M12 wird, gemäß ETAG 001 PART 5, wie folgt vorgegangen:
Zunächst werden Bohrlöcher (Durchmesser 14 mm; Tiefe 72 mm) in einen horizontal liegenden Betonprüfkörper (Betontyp C20/25) mit einem Bohrhammer eingebracht. Die Bohrlöcher werden mit einem Handausbläser und einer Handbürste gereinigt. Anschließend werden die Bohrlöcher mit der jeweiligen zu prüfenden härtbaren Masse für Befestigungszwecke zu zwei Dritteln befüllt. Je Bohrloch wird eine Gewindestange von Hand eingedrückt. Der Mörtelüberschuss wird mittels eines Spachtels entfernt. Nach 24 Stunden bei Raumtemperatur (ca. 23 °C) wird die Gewindestange gezogen bis zum Versagen unter Messung der Versagenslast.

### Bestimmung der Gelzeit

Die Gelzeit wird von einer 100 g-Mischung in einem Kunststoffbecher bei 23 °C mittels Gelnorm-Gel Timer (Gel Instrumente AG, Oberuzwil, Schweiz) bestimmt. Beim Erreichen des Gelierpunktes wird hierbei der Kunststoffbecher, welcher die härtende Mischung und einen Messstempel enthält, durch einen Hubvorgang hochgezogen. Ein elektronischer Kontakt stoppt die nach Beginn der Prüfung gestartete Uhr im Steuergerät und die Gelierzeit kann direkt abgelesen werden.

### Synthese der Aldimine

In einem Rundkolben wird das entsprechende Amin vorgelegt. Unter kräftigem Rühren wird aus einem Eintropftrichter der Aldehyd langsam zugegeben, wobei sich die Mischung erwärmt. Nach beendeter Zugabe werden die flüchtigen Bestandteile (Reaktionswasser) im Vakuum entfernt (Ald-003 und Ald-012) oder alternativ nicht entfernt (Isob-002). Das entstehende Reaktionswasser separiert sich je nach verwendetem Amin ("hydrophobe" Amine) vom Aldimin. Das im Aldimin vorliegende Restwasser stört die Verwendung als Initiator nicht. Unter Verwendung von "hydrophilen" Aminen findet keine Phasenseparation statt. Wahlweise kann auch der Aldehyd vorgelegt und das Amin zu getropft werden. Die für die Synthese verwendeten stöchiometrischen Verhältnisse der Edukte sind dem Fachmann bekannt.

Zur Herstellung der nachfolgenden Beispielformulierungen werden folgende Bestandteile und Abkürzungen verwendet.

**Tabelle 1: verwendete Bestandteile und Abkürzungen**

| **Abkürzung** | **Bezeichnung** |
|---|---|
| GDMA | 1,3-Glycerindimethacrylat |
| BDDMA | 1,4-Butandioldimethacrylat |
| HPMA | 2-Hydroxypropylmethacrylat |
| S6105 | Sarbio 6105 (Arkema): exo-1,7,7-Trimethylbicyclo[2.2.1]hept-2-ylmethacrylat |
| MEMO | 3-Methacryloxypropyltrimethoxysilan |
| E2BADMA | Ethoxyliertes Bisphenol-A-Dimethacrylat (technisches Produkt - verschiedene Ethoxylierungsgrade möglich) |
| A/F | Bisphenol-A/F-Diglycidylether |
| RD20 | ipox RD20 (ipox Chemicals): Trimethylolpropanpolyglycidylether |
| Dytek A | 2-Methylpentandiamin (Dytek) |
| A139 | Vestamin A139, Aldimin aus IPDA und Isobutyraldehyd, (Evonik) |
| SolCop8 | Soligen Copper 8 (Cu-carboxylat, aktiver Inhalt: 7,8 - 8,2 %, OMG Borchers GmbH |
| CuSO₄ | Kupfersulfat-Pentahydrat 5%ig in 1,2-Propandiol |
| ND15 | Ecos ND 15 (aktiver Inhalt: 4 %; Umicore Specialty Materials Brugge NV) |
| OxyCu | Borchi Oxy Cure (aktiver Inhalt: 10 %; Akzo Nobel Functional Chemicals B.V.) |
| Isob-002 | Aldimin aus Isobutyraldehyd und m-Xylylendiamin |
| Ald-003 | Aldimin aus Isobutyraldehyd und Priamine 1071 (dimerer Diamin-Baustein; Croda Coatings & Polymers) |
| Ald-012 | Aldimin aus Isobutyraldehyd und N-(3-aminopropyl)imidazol |
| AMicro5 | Alsigran Micro 5: Quarzmehl (Biesterfeld Spezialchemie GmbH) |
| Sand | Quarzsand mit einer Körnung von 0,08 - 0,2 mm |

### Beispiel 1: Auszuasversuche mit variierendem Iminaehalt

Gemäß den vorgenannten Angaben für "Auszugsversuche aus Beton" werden Setzversuche durchgeführt.

**Tabelle 2: Rezepturen zur Durchführung von Setzversuchen mit Verbundspannungen**

| **Beispiel** | **B1.1** | **B1.2** | **B1.3** | **B1.4** | **B1.5** |
|---|---|---|---|---|---|
| GDMA [g] | 5,60 | | | | |
| BDDMA [g] | 3,36 | 3,22 | 2,97 | 2,72 | 2,47 |
| A/F [g] | 13,44 | | | | |
| SolCop8 [g] | 0,03 | | | | |
| Dytek A [g] | 2,45 | | | | |
| A139 [g] | 0,11 | 0,25 | 0,50 | 0,75 | 1,00 |
| Sand [g] | 50,00 | | | | |
| n (C=C) : n (N=C) | 98 | 43 | 21 | 14 | 10 |
| Verbundspannung [N/mm²] | 21 | 27 | 30 | 29 | 28 |

Aus Tabelle 2 ist ersichtlich, dass die erfindungsgemäßen Hybridharzsysteme sehr gute Verbundspannungen erzielen. Weiterhin zeigt die Tabelle 2, dass der erfindungsgemäße Initiator in weiten Bereichen variiert werden kann, ohne dass die resultierenden Zusammensetzungen einen merklichen Abfall der Verbundspannung erleiden (Beispiele B1.2 - B1.5).

Dies spiegelt außerdem die Robustheit der erfindungsgemäßen

Hybridharzzusammensetzungen wieder, was für die Anwendung für bauliche Zwecke von großem Vorteil ist.

### Beispiel 2: Auszuasversuche mit unterschiedlichen radikalisch härtbaren Reaktivverdünnern

Die nachfolgende Tabelle 3 zeigt die ermittelten Verbundspannungen unter Verwendung von unterschiedlichen Reaktivverdünnern.

**Tabelle 3: Rezepturen mit variierenden Reaktivverdünnern**

| **Beispiel** | **B2.1** | **B2.2** | **B2.3** | **B2.4** | **B2.5** |
|---|---|---|---|---|---|
| GDMA [g] | 5,60 | | | 8,57 | 5,60 |
| HPMA [g] | 2,97 | - | - | - | - |
| S6105 [g] | - | 2,97 | - | - | - |
| MEMO [g] | - | - | 2,97 | - | - |
| BDDMA [g] | - | - | - | - | 2,97 |
| A/F [g] | 13,44 | | | | |
| SolCop8 [g] | 0,03 | | | | |
| Dytek A [g] | 2,45 | | | | |
| A139 | 0,50 | | | | |
| Sand [g] | 50,00 | | | | |
| Verbundspannung [N/mm²] | 26 | 26 | 29 | 26 | 28 |

Die Tabelle 3 verdeutlicht, dass in der erfindungsgemäßen Reaktionsharzzusammensetzung unterschiedliche Reaktivverdünner verwendet werden können.

Der Unterschied in der Verbundspannung zwischen den Beispielen B1.3 und B2.5 - trotz identischer Rezeptur - ist auf eine andere Betonplatte zurückzuführen, d.h. die Versuche wurden nicht in der gleichen Betonplatte durchgeführt, und liegt im üblichen Bereich der Messgenauigkeit.

### Beispiel 3: Auszugsversuche und Gelzeiten mit unterschiedlichem Verhältnis n (C=C) : n (EP)

Tabelle 4 stellt die Abhängigkeit der Verbundspannung und der Gelzeit von unterschiedlichen n (C=C) : n (EP) Verhältnissen dar.

**Tabelle 4: Rezepturen mit unterschiedlichen Verhältnissen n (C=C) : n (EP)**

| **Beispiel** | **B3.1** | **B3.2** | **B3.3** | **B3.4** | **B3.5** | **B2.5** |
|---|---|---|---|---|---|---|
| GDMA [g] | 7,99 | 11,68 | 14,38 | 4,56 | 3,23 | 5,60 |
| BDDMA [g] | 4,24 | - | - | 1,95 | 0,66 | 2,97 |
| E2BADMA [g] | - | 6,20 | 7,63 | - | - | - |
| A/F [g] | 10,18 | 5,26 | 1,61 | 15,29 | 17,64 | 13,44 |
| SolCop8 [g] | 0,03 | | | | | |
| Dytek A [g] | 1,85 | 0,96 | 0,29 | 2,79 | 3,22 | 2,45 |
| A139 [g] | 0,71 | 0,86 | 1,06 | 0,38 | 0,23 | 0,50 |
| Sand [g] | 50,00 | | | | | |
| n (C=C) : n (EP) | 2 | 4 | 17 | 0,7 | 0,3 | 1 |
| n (C=C) : n (N=C) | 21 | | | | | |
| Verbundspannung [N/mm²] | 26 | 21 | 15 | 28 | 27 | 28 |
| Gelzeiten [hh:mm:ss] | 00:05:22 | 00:01:52 | - | 00:12:35 | 00:17:14 | 00:08:00 |

Wie eingangs erwähnt, ist das Ziel der Erfindung, die Vorteile von radikalisch härtenden Systemen mit polyadditionshärtenden Systemen zu vereinen; nämlich eine schnelle Aushärtung - auch bei tiefen Temperaturen - bei hohen Auszugswerten bzw. Verbundspannungen. Aus Tabelle 4 wird ersichtlich, dass mit steigendem Verhältnis von n (C=C) : n (EP) die Gelzeit in einem weitem Bereich enorm verkürzt werden kann, ohne dass die Verbundspannung auf das etwas tiefer liegende Niveau von radikalisch härtenden Systemen absinkt. Die Gelzeit wird gemäß der oben beschriebenen Erläuterung durchgeführt. Anstatt Sand wurden zur Bestimmung der Gelzeit 40,6 Gew.% Quarzmehl verwendet. Als Referenz wurde die Gelzeit eines reinen epoxidbasierten Systems unter Verwendung des oben genannten Amins bestimmt (siehe Referenz-Beispiel 1).

### Beispiel 4: Auszugsversuche mit variierendem Soligen Copper 8 Gehalt

In Tabelle 5 sind die Verbundspannungen mit unterschiedlichen Soligen Copper 8 Gehalten dargestellt.

**Tabelle 5: Rezepturen mit unterschiedlichen Gehalten an Soligen Copper 8**

| **Beispiel** | **B4.1** | **B4.2** | **B4.3** | **B4.4** |
|---|---|---|---|---|
| GDMA [g] | 5,60 | 5,60 | 5,58 | 5,56 |
| BDDMA [g] | 2,97 | 2,97 | 2,96 | 2,95 |
| A/F [g] | 13,44 | 13,43 | 13,40 | 13,35 |
| SolCop8 [g] | 0,03 | 0,06 | 0,11 | 0,21 |
| Dytek A [g] | 2,45 | 2,45 | 2,44 | 2,43 |
| A139 [g] | 0,50 | | | |
| Sand [g] | 50,00 | | | |
| n (N=C) : n (Cu) | 85 | 49 | 26 | 14 |
| SolCop8 [ppm] | 36 | 62 | 115 | 220 |
| Verbundspannung [N/mm²] | 28 | 28 | 30 | 30 |

Aus Tabelle 5 wird ersichtlich, dass der Metallsalzgehalt in weiten Bereichen variiert werden kann.

### Beispiel 5: Auszugsversuchen mit unterschiedlichen Metallsalzen

Die nachfolgende Tabelle 6 illustriert die Anwendbarkeit verschiedener Metallsalze als Aktivator für die erfindungsgemäße Reaktionsharzzusammensetzung.

**Tabelle 6: Rezepturen mit unterschiedlichen Metallsalzen**

| **Beispiel** | **B5.1** | **B5.2** | **B5.3** | **B5.4** |
|---|---|---|---|---|
| GDMA [g] | 5,60 | | | 5,58 |
| BDDMA [g] | 2,97 | | | 2,96 |
| A/F [g] | 13,44 | | | 13,39 |
| CuSO4 [g] | 0,06 | - | - | - |
| ND15 [g] | - | 0,06 | - | - |
| OxyCu [g] | - | - | 0,06 | - |
| SolCop8 [g] | - | - | - | 0,03 |
| Dytek A [g] | 2,45 | | | 2,54 |
| A139 [g] | 0,50 | | | |
| Sand [g] | 50,00 | | | |
| Verbundspannung [N/mm²] | 27 | 28 | 27 | 30 |

In Beispiel B5.4 wurde anstatt eines Bisphenol-A/F-Diglycidylethers eine 80 : 20 Abmischung des A/F-Harzes mit einem trifunktionellen EP-Reaktivverdünner (Trimethylolpropantriglycidylether - RD20) verwendet. Wie aus der Tabelle 6 ersichtlich wird, können als Aktivator die verschiedensten Metallsalze genutzt werden. Außerdem verdeutlicht das Beispiel B5.4, dass auch auf Seite des Reaktionsharzes (a2) Reaktivverdünner eingesetzt werden können.

### Beispiel 6: Auszuasversuche mit unterschiedlichen Iminen

Tabelle 7 zeigt die ermittelten Verbundspannungen unter Verwendung verschiedener Imine.

**Tabelle 7: Rezepturen mit unterschiedlichen Iminen**

| **Beispiel** | **B6.1** | **B6.2** | **B6.3** |
|---|---|---|---|
| GDMA [g] | 5,60 | | |
| BDDMA [g] | 2,97 | | |
| A/F [g] | 13,44 | | |
| SolCop8 [g] | 0,03 | | |
| Dytek A [g] | 2,45 | | |
| Isob-002 [g] | 0,44 | - | - |
| Ald-V003 [g] | - | 1,08 | - |
| Ald-V012 [g] | - | - | 0,64 |
| Sand [g] | 50,00 | | |
| n (C=C) : n (N=C) | 21 | 21 | 21 |
| Verbundspannung [N/mm²] | 26 | 27 | 29 |

Wie aus Tabelle 7 ersichtlich, können die verschiedensten Imine als Initiator in der erfindungsgemäßen Reaktionsharzzusammensetzung verwendet werden. Die Beispiele B6.1 und B6.2 verdeutlichen, dass Imine mit unterschiedlichen Funktionalitäten (Isob-002 - Imin-Funktionalität: 2; Ald-V003 - Imin-Funktionalität: 1) benutzt werden können. Weiterhin verdeutlichen die gennanten Beispiele die unterschiedlichen Synthesevarianten: Bei der Synthese des Imins Ald-V003 wurden die flüchtigen Bestandteile entfernt, bei dem Imin Isob-002 nicht. In Beispiel B6.3 wurde ein spezielles Imin auf Basis N-(3-Aminopropyl)imidazol verwendet, welches neben der Initiation der radikalischen Polymerisation auch die Homopolymerisation des Epoxidharzes fördert.

### Referenz-Beispiel 1: Gelzeit reines EP-System mit Dvtek A als Härter

Die nachfolgende Tabelle 8 zeigt eine vereinfachte Rezeptur zur Bestimmung der Gelzeit.

**Tabelle 8: Gelzeit reines EP-System mit Dytek A als Härter**

| **Beispiel** | **Ref-Bsp 1** |
|---|---|
| A/F [g] | 36,12 |
| RD20 [g] | 13,55 |
| AMicro5 [g] | 40,64 |
| Dytek A [g] | 9,69 |
| Gelzeit [hh:mm:ss] | 01:39:25 |

Die Tabelle 8 belegt, dass die Gelzeiten reiner EP-Systeme deutlich höher liegen.

### Referenz-Beispiel 2: Auszuasversuche ohne erfindungsgemäßen Initiator

Um zu verdeutlichen, dass es sich um ein Hybridsystem handelt, in dem sowohl die radikalisch polymerisierbaren Reaktionsharze (a1) als auch die mittels Polyaddition härtbaren Reaktionsharze (a2) zum Aufbau der Festigkeit beitragen, wurden nachfolgende Versuche durchgeführt:
- Auszugsversuch ohne Metallsalz (Ref-B2.1)
- Auszugsversuch ohne Imin und Metallsalz (Ref-B2.2)

Die Tabelle 9 zeigt die zugehörigen Rezepturen.

**Tabelle 9: Rezepturen für Auszugsversuche ohne Initiator**

| **Beispiel** | **Ref-B2.1** | **Ref-B2.2** |
|---|---|---|
| GDMA [g] | 5,60 | 5,85 |
| BDDMA [g] | 3,01 | 3,26 |
| A/F [g] | 13,44 | 13,44 |
| SolCop8 [g] | - | - |
| Dytek A [g] | 2,45 | 2,45 |
| A139 [g] | 0,50 | - |
| Sand [g] | 50,00 | 50,00 |
| Verbundspannung [N/mm²] | 3,1 | 2,7 |

Aus Tabelle 9 wird ersichtlich, dass die hohen Verbundspannungen nur erreicht werden, wenn sowohl das Reaktionsharz (a1), als auch das Reaktionsharz (a2) zum Festigkeitsaufbau beitragen. Diese Versuche belegen den Hybrid-Charakter der erfindungsgemäßen Reaktionsharzzusammensetzung.

## Patentansprüche

1. Mehrkomponentiges Hybridharzsystem für die chemische Befestigungstechnik, insbesondere zum Befestigungen von Verankerungsmitteln in Löchern oder Spalten, welches in einem Reaktionsharzbestandteil (A) ein Reaktionsharz auf Basis radikalisch polymerisierbarer ungesättigter Verbindungen und ein Reaktionsharz, welches durch Polyaddition mit einem Amin reagieren kann, beinhaltet, weiter räumlich getrennt davon vor der Anwendung, um eine Reaktion vor dem Vermischen der Komponenten (A) und (H) vor dem Vermischen zu verhindern, beinhaltend peroxidfreie Initiatoren in Form von ein oder mehreren Iminen für die Polymerisation des radikalisch polymerisierbaren Reaktionsharzes und mindestens ein Amin in einem Härterbestandteil (H); sowie Metallsalze als Aktivator.

2. Hybridharzsystem nach Anspruch 1, **dadurch gekennzeichnet, dass** es
einen Reaktionsharzbestandteil (A), der
mindestens eine Verbindung (a1), die radikalisch polymerisieren kann,
mindestens eine Verbindung (a2), die mit einem Amin durch Polyaddition reagieren kann,
und optional eine verbrückende Verbindung (a3) mit mindestens zwei Funktionalitäten, wovon eine radikalisch (co)polymerisieren und eine mit einem Amin durch Polyaddition reagieren kann, enthält,
und einen Härterbestandteil (H), der
mindestens ein Imin (h1) und
mindestens ein Amin (h2),),
und optional eine verbrückende Verbindung (h3) die sowohl mindestens eine Iminals auch mindestens eine Amino -Funktionalität trägt, enthält,
wobei der Harzbestandteil (A) und/oder der Härterbestandteil (H) weiterhin mindestens ein Metallsalz als Aktivator beinhaltet.

3. Hybridharzsystem nach Anspruch 2, **dadurch gekennzeichnet, dass** die mindestens eine Verbindung (h2) ein lineares oder verzweigtes primäres und/oder sekundäres Mono-, Di- oder Polyamin ist und die mindestens eine Verbindung (a2) mit diesem unter Additionsreaktion polymerisieren kann.

4. Hybridharzsystem nach einem der Ansprüche 1 bis 3, worin das oder die Imine (h1) nur oder auch Mischungen von Amin mit mindestens einem Aldehyd und/oder mindestens einem einem Keton als Vorstufen für Aldimine und/oder Ketimine beinhaltet.

5. Hybridharzsystem nach einem der Ansprüche 1 bis 3, worin das oder die Imine als Aldimin und/oder als Ketimine beinhaltet sind.

6. Hybridharzsystem nach Anspruch 5, worin das oder die Imine (h1) ein oder mehrere Imin-Strukturinkremente der Formel (I) beinhalten: 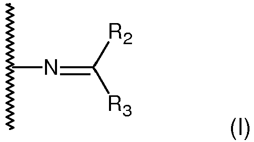 worin unabhängig voneinander:
die gewellte Linie den organischen Rest des oder der verwendeten Amine darstellt, oder für Wasserstoff steht; und
R₂ und R₃ unabhängig voneinander Wasserstoff und/oder einen unsubstituierten oder substituierten, gegebenenfalls Doppelbindungen und/oder Heteroatome aufweisenden, ein- oder mehrfach verzweigten oder geradkettigen organischen Rest, welcher mindestens eine aliphatische, heteroaliphatische, alicyclische oder heterocyclische Molekülstruktur, oder eine Kombination von zwei oder mehr der vorgenannten Molekülstrukturen beinhaltet, bedeutet; und/oder Salze davon.

7. Hybridharzsysteme nach einem der Ansprüche 1 bis 6, worin das oder die Imine (h1) Umsetzungsprodukt(e) von Aldehyden und/oder Ketonen ausgewählt aus Propanal, Valeraldehyd, Isovaleraldehyd, Methoxyacetaldehyd, 3,7-Dimethyl-7-hydroxyoctenal, Isobutyraldehyd, 2-Ethylhexanal, 2-Methylbutanal, 2-Ethylbutanal, 2-Methylvaleraldehyd, 2,3-Dimethylvaleraldehyd, Cyclohexylcarboxaldehyd, 3,7-Dimethyl-2,6-octadienal, 3-(4-tert-Butylphenyl)-2-methylpropanal, Tetrahydrofuran-3-carboxaldehyd, Tetrahydro-2-furancarboxaldehyd, 4-Formyltetrahydropyran, Tetrahydro-2H-pyran-2-carbaldehyd und Tetrahydro-pyran-3-carbaldehyd, oder vorzugsweise Diisopropylketon, 3-Methyl-2-pentanon, 2-Methylcyclohexanon und ß-Iononen; oder Gemischen von zwei oder mehr dieser Verbindungen, sind;.
mit ein oder mehreren Aminen ausgewählt aus Mono-, Di- oder Polyaminen sind, bevorzugt aus der Gruppe der Alkylamine; wie z.B. 1,2-Diaminoethan, 2-Methylpentandiamin, 2,2-Dimethyl-1,3-propandiamin, Diethylaminopropylamin oder 2,2,4- oder 2,4,4-Trimethylhexamethylendiamin; der Heteroalkylamine, wie beispielsweise 1,13-Diamino-4,7,10-trioxatridecan; der aminfunktionalisierten Polyoxyalkylene [Jeffamine]; oder Dimethylaminopropylaminopropylamin, oder z.B. Triethylentetramin und/oder höherer Homologen; der Cycloalkylamine, wie z.B. Isophorondiamin, 1,3- und/oder 1,4-Bisaminomethylcyclohexan, TCD-Diamin, 1,2- und 1,4-Diaminocyclohexan, Bis(4-aminocyclohexyl)methan, Bis(4-amino-3-methylcyclohexyl)methan, Norbornandiamin, Diaminodicyclohexylmethan oder 2,2-Bis(4-aminocyclohexyl)propan, der Heterocyloalkylamine, wie z.B. Aminoethylpiperazin, und der aliphatisch-aromatischen Amine, wie 1,3- oder 1,4-Benzoldimethanamin, ausgewählt, insbesondere aus 2-Methylpentandiamin, 1,2-Diaminocyclohexan, 1-Amino-3-aminomethyl-3,5,5-trimethylcyclohexan, 1,3-Benzoldimethanamin, 1,4-Benzoldimethanamin, 1,6-Diamino-2,2,4-trimethylhexan, Triethylentetramin, Tetraethylenpentamin, Pentaethylenhexamin, N-Aminoethylpiperazin, 1,3-Bis(aminomethyl)cyclohexan, TCD-Diamin, Jeffamin, Dipropylentriamin, N,N'-Dicyclohexyl-1,6-hexandiamin, N,N'-Dimethyl-1,3-diaminopropan, N,N'-Diethyl-1,3-diaminopropan, N,N-Dimethyl-1,3-diaminopropan, sekundären Polyoxypropylendi- und triaminen, 2,5-Diamino-2,5-dimethylhexan, Bis-(aminomethyl)tricyclopentadien, 1,8-Diamino-p-menthan und Bis-(4-amino-3,5-dimethylcyclohexyl)methan" und der aminosilanisierten Füllstoffe, oder von Gemischen von zwei oder mehr dieser Verbindungen.

8. Hybridharzsystem nach einem der Ansprüche 2 bis 7, **dadurch gekennzeichnet, dass** es ein Zweikomponentensystem mit den Komponenten (A) und (H) ist und
in der Komponente (A)
als Komponete (a1) ethylenisch ungesättigte Verbindungen, wie Styrol und Derivate; Vinylester, wie (Meth)Acrylate, Urethan(meth)acrylate oder Itaconate, oder Epoxy(meth)acrylate; ferner ungesättigte Polyester, Vinylether, Allylether, Dicyclopentadien-Verbindungen und ungesättigte Fette; insbesondere jeweils propoxylierte oder insbesondere ethoxylierte aromatische Diol-, wie Bisphenol-A-, Bisphenol-F- oder Novolak-(insbesondere di-) (meth)acrylate, Epoxy(meth)acrylate, insbesondere in Form von Umsetzungs-produkten von Di- oder Polyepoxiden, z.B. Bisphenol-A-, Bisphenol-F- oder Novolak-di- und/ oder - poly-glycidylethern, mit ungesättigten Carbonsäuren, z.B. C₂-C₇-Alkencarbonsäuren, wie insbesondere (Meth)acrylsäure (hier zu den Vinylestern gehörend); Urethan- und/oder Harnstoff(meth)acrylate, insbesondere Urethan(meth)acrylate, die z.B. durch Umsetzung von Di- und/oder Polyisocyanaten mit (Meth)Acrylverbindungen, wie z.B. Hydroxyethyl- oder Hydroxypropylmethacrylat, gegebenenfalls unter Mitwirkung von Hydroxyverbindungen, die mindestens zwei Hydroxylgruppen enthalten, erhalten wurden; oder ungesättigte Polyester¬harze, oder zwei oder mehr dieser härtbaren ungesättigten organischen Komponenten, besonders Vinylesterharze;
als Komponente (a2) ein Epoxidharz, vorzugsweise auf Basis von Glycidylverbindungen, beispielsweise solchen mit einer durchschnittlichen Glycidylgruppenfunktionalität von 1,5 oder größer, insbesondere von 2 oder größer, z.B. von 2 bis 10, die optional weitere(n) Glycidylether als Reaktivverdünner beinhalten können, vorzugsweise Poly(einschließlich Di)-glycidylether von mindestens einem mehrwertigen Alkohol oder Phenol, wie Novolak, Bisphenol F oder Bisphenol A, oder Gemische solcher Epoxide, beispielsweise erhältlich durch Umsetzung der entsprechenden mehrwertigen Alkohole mit Epichlorhydrin, wie Trimethylolpropantriglycidylether, Novolak-Epoxidharze, Bisphenol-A-Epichlorhydrinharze und/oder Bisphenol-F-Epichlorhydrinharze, beispielsweise mit einem durchschnittlichen Molekulargewicht von ≤ 2000;
und in der Komponente (H)
als Komponente (h1) ein Aldimin oder Ketimin, wie in einem der vorstehenden Ansprüche näher definiert, oder eine Mischung davon beinhaltet,
als Komponente (h2) Di- oder Polyamine, insbesondere jeweils ein oder mehrere Alkylamine, wie z.B. 1,2-Diaminoethan, 2-Methylpentandiamin, 2,2-Dimethyl-1,3-propandiamin, Diethylaminopropylamin, 2,2,4- oder 2,4,4-Trimethylhexamethylendiamin; Heteroalkylamine, wie beispielsweise 1,13-Diamino-4,7,10-trioxatridecan; aminfunktionalisierte Polyoxyalkylene [Jeffamine], Dimethylaminopropylaminopropylamin; Triethylentetramin und/oder höhere Homologe; Cycloalkylamine, wie z.B. Isophorondiamin, 1,3- und/oder 1,4-Bisaminomethylcyclohexan, TCD-Diamin, 1,2- und 1,4-Diaminocyclohexan, Bis(4-aminocyclohexyl)methan, Bis(4-amino-3-methylcyclohexyl)methan, Norbornandiamin, Diaminodicyclohexylmethan oder 2,2-Bis(4-aminocyclohexyl)propan); Heterocyloalkylamine, wie z.B. Aminoethylpiperazin, oder aliphatisch-aromatische Amine, wie 1,3- oder 1,4-Benzoldimethanamin, oder zwei oder mehr dieser Verbindungen; insbesondere 2-Methylpentandiamin, 1,2-Diaminocyclohexan, 1-Amino-3-aminomethyl-3,5,5-trimethylcyclohexan, 1,3-Benzoldimethanamin, 1,4-Benzoldimethanamin, 1,6-Diamino-2,2,4-trimethylhexan, Triethylentetramin, Tetraethylenpentamin, Pentaethylenhexamin, N-Aminoethylpiperazin, 1,3-Bis(aminomethyl)cyclohexan, TCD-Diamin, Jeffamin, Dipropylentriamin, N,N'-Dicyclohexyl-1,6-hexandiamin, N,N'-Dimethyl-1,3-diaminopropan, N,N'-Diethyl-1,3-diaminopropan, N,N-Dimethyl-1,3-diaminopropan, sekundäre Polyoxypropylendi- und triamine, 2,5-Diamino-2,5-dimethylhexan, Bis-(aminomethyl)tricyclopentadien, 1,8-Diamino-p-menthan oder Bis-(4-amino-3,5-dimethylcyclohexyl)methan, oder Gemische von zwei oder mehr dieser Verbindungen; und/oder ein oder mehrere Aminoalkylsilane, die mindestens eine hydrolysierbare Gruppe am Silicium gebunden beinhalten,
beinhaltet.

9. Hybridharzsystem nach einem der Ansprüche 1 bis 8, worin der Gewichtsanteil des oder der Härter (h1) und/oder (h2) und/oder optional (h3)) und/oder den möglichen Aldimin-Vorstufen liegt, vorzugsweise im Bereich von 0,01 bis 50 Gew.-%, z.B. zwischen 0,5 und 40 Gew.-% oder zwischen 1 und 30 Gew.-% oder insbesondere von 0,1 bis 40, beispielsweise 0,5 bis 30 Gew.-%; der Gewichtsanteil des Reaktionsharzes (a1) im Bereich von 0,1 bis 80 Gew.-%, z.B. zwischen 0,5 und 75 Gew.-% oder zwischen 1 und 40 Gew.-% oder insbesondere von 5 bis 60, beispielsweise 20 bis 50 Gew.-%, liegt, und der Anteil des Reaktionsharzes (a2), vorzugsweise zusammen mit der optionalen verbrückenden Verbindung (a3), an der Gesamtmasse des Hybridharzsystems 0,1 bis unter 80 Gew.-%, insbesondere 5 bis 75 Gew.-%, 5 bis 70 Gew.-% oder 5 bis 50 Gew.-% beträgt.

10. Hybridharzsystem nach einem der Ansprüche 1 bis 9, worin als Aktivatoren in Form eines Metallsalzes, was auch Metallkomplexe und Metalloxide einschließt, ein oder mehrere Metallsalze von organischen und/oder anorganischen Säuren mit Metallen, z.B. ausgewählt aus Kupfer, Eisen, Vanadium, Mangan, Cer, Kobalt, Zirkonium und Wismut, oder Gemischen von zwei oder mehr davon; wobei die Metallsalze vorzugsweise aus der Gruppe ausgewählt sind, die aus Salzen von Kupfer, Eisen, Mangan, Kobalt und Vanadium besteht und wobei bevorzugte Metallsalze mit anorganischen Säureresten Sulfate, Nitrate oder Chloride sind, oder bevorzugte Metallsalze mit organischen Säureresten, die besonders als Metallsalze bevorzugt sind, Carboxylate, wie Octoate, Naphthenate, Acetate, Tartrate, Gluconate, oder Butyrate .

11. Verwendung eines Hybridharzsystems nach einem der Ansprüche 1 bis 10 als Klebstoff, Beschichtungsstoff oder Formmasse.

12. Verwendung eines Hybridharzsystems nach einem der Ansprüche 1 bis 10 zur Befestigung von Verankerungsmitteln in Bausubstraten.

13. Verfahren oder Methode zum Befestigen von Verankerungsmitteln in Löchern oder Spalten, wobei ein Hybridharzsystem nach einem der Ansprüche 1 bis 10 und ein Verankerungsmittel nacheinander oder gleichzeitig in ein Loch oder einen Spalt in einem Bausubstrat eingebracht werden, oder zur Befestigung von Fasern, Gelegen, Geweben oder Composites zur Verstärkung von Bauwerken, bei dem ein Hybridharzsystem nach einem der Ansprüche 1 bis 10 als Befestigungsmittel verwendet wird.

## Claims

1. Multi-component hybrid resin system for chemical fixing technology, especially for fixings of anchoring means in holes or crevices, which includes, in a reactive resin constituent (A), a reactive resin based on free-radical-polymerisable unsaturated compounds and a reactive resin which is able to react with an amine by polyaddition, further physically separated therefrom prior to use in order to prevent a reaction before the mixing of the components (A) and (H) before mixing, including peroxide-free initiators in the form of one or more imines for the polymerisation of the free-radical-polymerisable reactive resin and at least one amine in a hardener constituent (H); and also metal salts as activator.

2. Hybrid resin system according to claim 1, **characterised in that** it comprises
a reactive resin constituent (A) which contains
at least one compound (a1) which is capable of free-radical polymerisation,
at least one compound (a2) which is able to react with an amine by polyaddition,
and optionally a bridging compound (a3) having at least two functionalities, of which one is capable of free-radical (co)polymerisation and one is able to react with an amine by polyaddition,
and a hardener constituent (H) which contains
at least one imine (h1) and
at least one amine (h2),
and optionally a bridging compound (h3) which carries both at least one imine functionality and at least one amino functionality,
wherein the resin constituent (A) and/or the hardener constituent (H) further includes at least one metal salt as activator.

3. Hybrid resin system according to claim 2, **characterised in that** the at least one compound (h2) is a linear or branched primary and/or secondary mono-, di- or polyamine and the at least one compound (a2) is able to polymerise therewith, with an addition reaction taking place.

4. Hybrid resin system according to any one of claims 1 to 3, wherein the imine(s) (h1) include(s) only or also mixtures of amine with at least one aldehyde and/or at least one ketone as precursors for aldimines and/or ketimines.

5. Hybrid resin system according to any one of claims 1 to 3, wherein the imine(s) are included in the form of aldimine and/or in the form of ketimines.

6. Hybrid resin system according to claim 5, wherein the imine(s) (h1) include(s) one or more imine structural increments of the formula (I): 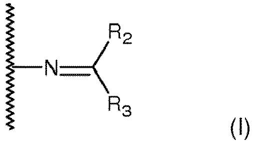 wherein independently of one another:
the wavy line represents the organic radical of the amine(s) used, or denotes hydrogen; and
R₂ and R₃ independently of one another denote hydrogen and/or an unsubstituted or substituted, mono- or poly-branched or straight-chain organic radical optionally having double bonds and/or hetero atoms, which radical includes at least one aliphatic, heteroaliphatic, alicyclic or heterocyclic molecular structure, or a combination of two or more of the afore-mentioned molecular structures; and/or salts thereof.

7. Hybrid resin systems according to any one of claims 1 to 6, wherein the imine(s) (h1) is(are) reaction product(s) of aldehydes and/or ketones selected from propanal, valeraldehyde, isovaleraldehyde, methoxyacetaldehyde, 3,7-dimethyl-7-hydroxy-octenal, isobutyraldehyde, 2-ethylhexanal, 2-methylbutanal, 2-ethylbutanal, 2-methylvaleraldehyde, 2,3-dimethylvaleraldehyde, cyclohexylcarboxaldehyde, 3,7-dimethyl-2,6-octadienal, 3-(4-tert-butylphenyl)-2-methylpropanal, tetrahydrofuran-3-carboxaldehyde, tetrahydro-2-furancarboxaldehyde, 4-formyltetrahydropyran, tetrahydro-2H-pyran-2-carbaldehyde and tetrahydropyran-3-carbaldehyde, or preferably diisopropyl ketone, 3-methyl-2-pentanone, 2-methylcyclohexanone and β-ionones; or mixtures of two or more of those compounds;
with one or more amines selected from mono-, di- or poly-amines, preferably selected from the group of alkylamines; such as, for example, 1,2-diaminoethane, 2-methylpentanediamine, 2,2-dimethyl-1,3-propanediamine, diethylaminopropylamine or 2,2,4-or 2,4,4-trimethylhexamethylenediamine; heteroalkylamines, such as, for example, 1,13-diamino-4,7,10-trioxatridecane; amine-functionalised polyoxyalkylenes [Jeffamines]; or dimethylaminopropylaminopropylamine, or, for example, triethylenetetramine and/or higher homologues; cycloalkylamines, such as, for example, isophoronediamine, 1,3- and/or 1,4-bisaminomethylcyclohexane, TCD-diamine, 1,2-and 1,4-diaminocyclohexane, bis(4-aminocyclohexyl)methane, bis(4-amino-3-methylcyclohexyl)methane, norbornanediamine, diaminodicyclohexylmethane or 2,2-bis(4-aminocyclohexyl)propane, heterocycloalkylamines, such as, for example, aminoethylpiperazine, and aliphatic-aromatic amines, such as 1,3- or 1,4-benzenedimethaneamine, especially from 2-methylpentanediamine, 1,2-diaminocyclohexane, 1-amino-3-aminomethyl-3,5,5-trimethylcyclohexane, 1,3-benzenedimethaneamine, 1,4-benzenedimethaneamine, 1,6-diamino-2,2,4-trimethylhexane, triethylenetetramine, tetraethylenepentamine, pentaethylenehexamine, N-aminoethylpiperazine, 1,3-bis(aminomethyl)cyclohexane, TCD-diamine, Jeffamine, dipropylenetriamine, N,N'-dicyclohexyl-1,6-hexanediamine, N,N'-dimethyl-1,3-diaminopropane, N,N'-diethyl-1,3-diaminopropane, N,N-dimethyl-1,3-diaminopropane, secondary polyoxypropylene di- and tri-amines, 2,5-diamino-2,5-dimethylhexane, bis(aminomethyl)tricyclopentadiene, 1,8-diamino-p-menthane and bis-(4-amino-3,5-dimethylcyclohexyl)methane, and amino-silanised fillers, or mixtures of two or more of those compounds.

8. Hybrid resin system according to any one of claims 2 to 7, **characterised in that** it is a two-component system having components (A) and (H) and includes
in component (A)
as component (a1) ethylenically unsaturated compounds, such as styrene and derivatives; vinyl esters, such as (meth)acrylates, urethane(meth)acrylates or itaconates, or epoxy(meth)acrylates; furthermore unsaturated polyesters, vinyl ethers, allyl ethers, dicyclopentadiene compounds and unsaturated fats; especially in each case propoxylated or especially ethoxylated aromatic diol-, such as bisphenol-A-, bisphenol-F- or novolak-(especially di-)(meth)acrylates, epoxy(meth)acrylates, especially in the form of reaction products of di- or poly-epoxides, for example bisphenol-A-, bisphenol-F- or novolak-di- and/or -poly-glycidyl ethers, with unsaturated carboxylic acids, for example C₂-C₇alkenecarboxylic acids, such as especially (meth)acrylic acid (here belonging to the vinyl esters); urethane- and/or urea-(meth)acrylates, especially urethane(meth)acrylates, which have been obtained, for example, by reaction of di- and/or poly-isocyanates with (meth)acrylic compounds, such as, for example, hydroxyethyl- or hydroxypropyl-methacrylate, optionally with the participation of hydroxy compounds that contain at least two hydroxyl groups; or unsaturated polyester resins, or two or more of those hardenable unsaturated organic components, especially vinyl ester resins;
as component (a2) an epoxy resin, preferably based on glycidyl compounds, for example those having an average glycidyl group functionality of 1.5 or more, especially of 2 or more, for example from 2 to 10, which can optionally include further glycidyl ether(s) as reactive diluent, preferably poly-(including di-)glycidyl ethers of at least one polyvalent alcohol or phenol, such as novolak, bisphenol F or bisphenol A, or mixtures of such epoxides, for example obtainable by reaction of the corresponding polyvalent alcohols with epichlorohydrin, such as trimethylolpropanetriglycidyl ether, novolak epoxy resins, bisphenol-A-epichlorohydrin resins and/or bisphenol-F-epichlorohydrin resins, for example having an average molecular weight of ≤ 2000;
and in the component (H)
as component (h1) an aldimine or ketimine, as defined in greater detail in one of the above claims, or a mixture thereof,
as component (h2) di- or poly-amines, especially in each case one or more alkylamines, such as, for example, 1,2-diaminoethane, 2-methylpentanediamine, 2,2-dimethyl-1,3-propanediamine, diethylaminopropylamine, 2,2,4- or 2,4,4-trimethylhexamethylenediamine; heteroalkylamines, such as, for example, 1,13-diamino-4,7,10-trioxatridecane; amine-functionalised polyoxyalkylenes [Jeffamines], dimethylaminopropylaminopropylamine; triethylenetetramine and/or higher homologues; cycloalkylamines, such as, for example, isophoronediamine, 1,3- and/or 1,4-bisaminomethylcyclohexane, TCD-diamine, 1,2- and 1,4-diaminocyclohexane, bis(4-aminocyclohexyl)methane, bis(4-amino-3-methylcyclohexyl)methane, norbornanediamine, diaminodicyclohexylmethane or 2,2-bis(4-aminocyclohexyl)propane); heterocycloalkylamines, such as, for example, aminoethylpiperazine, or aliphatic-aromatic amines, such as 1,3- or 1,4-benzenedimethaneamine, or two or more of those compounds; especially 2-methylpentanediamine, 1,2-diaminocyclohexane, 1-amino-3-aminomethyl-3,5,5-trimethylcyclohexane, 1,3-benzenedimethaneamine, 1,4-benzenedimethaneamine, 1,6-diamino-2,2,4-trimethylhexane, triethylenetetramine, tetraethylenepentamine, pentaethylenehexamine, N-aminoethylpiperazine, 1,3-bis(aminomethyl)cyclohexane, TCD-diamine, Jeffamine, dipropylenetriamine, N,N'-dicyclohexyl-1,6-hexanediamine, N,N'-dimethyl-1,3-diaminopropane, N,N'-diethyl-1,3-diaminopropane, N,N-dimethyl-1,3-diaminopropane, secondary polyoxypropylene-di-and -tri-amines, 2,5-diamino-2,5-dimethylhexane, bis(aminomethyl)tricyclopentadiene, 1,8-diamino-p-menthane or bis(4-amino-3,5-dimethylcyclohexyl)methane, or mixtures of two or more of those compounds; and/or one or more aminoalkylsilanes that include at least one hydrolysable group bonded to silicon.

9. Hybrid resin system according to any one of claims 1 to 8, wherein the proportion by weight of the hardener(s) (h1) and/or (h2) and/or optionally (h3)) and/or the possible aldimine precursors is preferably in the range of from 0.01 to 50 % by weight, for example between 0.5 and 40 % by weight or between 1 and 30 % by weight or especially from 0.1 to 40 % by weight, for example from 0.5 to 30 % by weight; the proportion by weight of the reactive resin (a1) is in the range of from 0.1 to 80 % by weight, for example between 0.5 and 75 % by weight or between 1 and 40 % by weight or especially from 5 to 60 % by weight, for example from 20 to 50 % by weight, and the proportion of the reactive resin (a2), preferably together with the optional bridging compound (a3), in the total mass of the hybrid resin system is from 0.1 to less than 80 % by weight, especially from 5 to 75 % by weight, from 5 to 70 % by weight or from 5 to 50 % by weight.

10. Hybrid resin system according to any one of claims 1 to 9, wherein activators in the form of a metal salt, which also includes metal complexes and metal oxides, include one or more metal salts of organic and/or inorganic acids with metals, for example selected from copper, iron, vanadium, manganese, cerium, cobalt, zirconium and bismuth, or mixtures of two or more thereof; the metal salts preferably being selected from the group consisting of salts of copper, iron, manganese, cobalt and vanadium, and preferred metal salts with inorganic acid radicals being sulfates, nitrates or chlorides, or preferred metal salts with organic acid radicals, which are especially preferred as metal salts, being carboxylates, such as octoates, naphthenates, acetates, tartrates, gluconates or butyrates.

11. Use of a hybrid resin system according to any one of claims 1 to 10 as an adhesive, coating material or moulding composition.

12. Use of a hybrid resin system according to any one of claims 1 to 10 for fixing anchoring means in building substrates.

13. Process or method for fixing anchoring means in holes or crevices, wherein a hybrid resin system according to any one of claims 1 to 10 and an anchoring means are introduced in succession or simultaneously into a hole or a crevice in a building substrate, or for fixing fibres, non-crimp fabrics, woven fabrics or composites for reinforcement of built structures, wherein a hybrid resin system according to any one of claims 1 to 10 is used as fixing means.

## Revendications

1. Système de résine hybride à plusieurs composants pour la technique de fixation chimique, en particulier pour la fixation de moyens d'ancrage dans des trous ou des fissures, qui contient, dans un ingrédient de résine de réaction, (A) une résine de réaction à base de composés insaturés polymérisables par voie radicalaire et une résine de réaction, qui peut réagir avec une amine par polyaddition, séparée de celle-ci avant l'application, afin d'éviter une réaction avant le mélange des composants (A) et (H) avant le mélange, contenant des initiateurs exempts de peroxyde sous forme d'une ou plusieurs imines pour la polymérisation de la résine de réaction polymérisable par voie radicalaire et au moins une amine dans un ingrédient (H) de durcisseur ; ainsi que des sels métalliques en tant qu'activateur.

2. Système de résine hybride selon la revendication 1, **caractérisé en ce qu'**il contient un ingrédient (A) de résine de réaction qui contient
au moins un composé (a1), qui peut être polymérisé par voie radicalaire,
au moins un composé (a2), qui peut réagir avec une amine par polyaddition, et
éventuellement un composé pontant (a3) comportant au moins deux fonctionnalités, l'une desquels pouvant être (co)polymérisée par voie radicalaire et l'une desquels pouvant réagir avec une amine par polyaddition,
et un ingrédient de durcisseur (H) qui contient
au moins une imine (h1) et
au moins une amine (h2),
et éventuellement un composé pontant (a3) qui porte au moins une fonctionnalité imine et également au moins une fonctionnalité amino,
l'ingrédient (A) de résine et/ou l'ingrédient (H) de durcisseur contenant en outre au moins un sel métallique en tant qu'activateur.

3. Système de résine hybride selon la revendication 2, **caractérisé en ce que** l'au moins un composé (h2) est une monoamine, une diamine ou une polyamine linéaire ou ramifiée, primaire et/ou secondaire et l'au moins un composé (a2) peut être polymérisé avec celle-ci dans une réaction d'addition.

4. Système de résine hybride selon l'une quelconque des revendications 1 à 3, l'imine ou les imines (h1) contien(nen)t seulement ou également des mélanges d'amine avec au moins un aldéhyde et/ou au moins une cétone en tant que précurseurs pour des aldimines et/ou des cétimines.

5. Système de résine hybride selon l'une quelconque des revendications 1 à 3, dans lequel l'imine ou les imines est/sont contenue(s) en tant qu'aldimine et/ou en tant que cétimine.

6. Système de résine hybride selon la revendication 5, dans lequel l'imine ou les imines (h1) contien(nen)t un ou plusieurs incréments de structure de formule (I) : 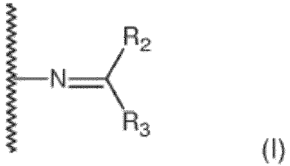 dans laquelle indépendamment les uns des autres :
la ligne ondulée indique le radical organique de l'amine ou des amines utilisée(s), ou représente hydrogène ; et
R₂ et R₃ signifient indépendamment l'un de l'autre hydrogène et/ou un radical organique non substitué ou substitué, présentant éventuellement des doubles liaisons et/ou des hétéroatomes, ramifié une ou plusieurs fois ou linéaire, qui contient au moins une structure moléculaire aliphatique, hétéroaliphatique, alicyclique ou hétérocyclique, ou une combinaison de deux ou plus des structures moléculaires mentionnées précédemment ; et/ou des sels correspondants.

7. Système de résine hybride selon l'une quelconque des revendications 1 à 6, l'imine ou les imines (h1) étant un ou des produit(s) de transformation d'aldéhydes et/ou de cétones choisi(s) parmi le propanal, le valéraldéhyde, l'isovaléraldéhyde, le méthoxyacétaldéhyde, le 3,7-diméthyl-7-hydroxyocténal, l'isobutyraldéhyde, le 2-éthylhexanal, le 2-méthylbutanal, le 2-éthylbutanal, le 2-méthylvaléraldéhyde, le 2,3-diméthylvaléraldéhyde, le cyclohexylcarboxaldéhyde, le 3,7-diméthyl-2,6-octadiénal, le 3-(4-tert-butylphényl)-2-méthylpropanal, le tétrahydrofuran-3-carboxaldéhyde, le tétrahydro-2-furannecarboxaldéhyde, le 4-formyltétrahydropyranne, le tétrahydro-2H-pyranne-2-carbaldéhyde et le tétrahydro-pyranne-3-carbaldéhyde, ou de préférence la diisopropylcétone, la 3-méthyl-2-pentanone, la 2-méthylcyclohexanone et la β-ionone ; ou des mélanges de deux ou plus de ces composés ;
avec une ou plusieurs amines choisies parmi des monoamines, des diamines et des polyamines, préférablement dans le groupe des alkylamines ; comme par exemple le 1,2-diaminoéthane, la 2-méthylpentanediamine, la 2,2-diméthyl-1,3-propanediamine, la diéthylaminopropylamine ou la 2,2,4- ou 2,4,4-triméthylhexaméthylènediamine ; des hétéroalkylamines, comme par exemple le 1,13-diamino-4,7,10-trioxatridécane ; les polyoxyalkylènes fonctionnalisés par amine [Jeffamine] ; ou la diméthylaminopropylaminopropylamine, ou par exemple la triéthylènetétramine et/ou des homologues supérieurs ; des cycloalkylamines, comme par exemple l'isophoronediamine, le 1,3-et/ou le 1,4-bisaminométhylcyclohexane, la TCD-diamine, le 1,2- et le 1,4-diaminocyclohexane, le bis(4-aminocyclohexyl)méthane, le bis(4-amino-3-méthylcyclohexyl)méthane, la norbornanediamine, le diaminodicyclohexylméthane ou le 2,2-bis(4-aminocyclohexyl)propane, des hétérocycloalkylamines, comme par exemple l'aminoéthylpipérazine, et des amines aliphatiques-aromatiques, comme la 1,3- ou la 1,4-benzènediméthaneamine, choisies en particulier parmi la 2-méthylpentanediamine, le 1,2-diaminocyclohexane, le 1-amino-3-aminométhyl-3,5,5-triméthylcyclohexane, la 1,3-benzènediméthaneamine, la 1,4-benzènediméthaneamine, le 1,6-diamino-2,2,4-triméthylhexane, la triéthylènetétramine, la tétraéthylènepentamine, la pentaéthylènehexamine, la N-aminoéthylpipérazine, le 1,3-bis(aminométhyl)cyclohexane, la TCD-diamine, la Jeffamine, la dipropylènetriamine, la N,N'-dicyclohexyl-1,6-hexanediamine, le N,N'-diméthyl-1,3-diaminopropane, le N,N'-diéthyl-1,3-diaminopropane, le N,N-diméthyl-1,3-diaminopropane, des polyoxypropylènediamines et des polyoxypropylènetriamines secondaires, le 2,5-diamino-2,5-diméthylhexane, le bis-(aminométhyl)tricyclopentadiène, le 1,8-diamino-p-menthane et le bis-(4-amino-3,5-diméthylcyclohexyl)méthane, et des charges aminosilanisées, ou de mélanges de deux ou plus de ces composés.

8. Système de résine hybride selon l'une quelconque des revendications 2 à 7, **caractérisé en ce que** c'est un système à deux composants avec les composants (A) et (H) et
dans le composant (A)
en tant que composant (a1), des composés éthyléniquement insaturés sont contenus, comme le styrène et des dérivés ; des esters de vinyle, comme des (méth)acrylates, des (méth)acrylates d'uréthane ou des itaconates, ou des (méth)acrylates d'époxy ; également des polyesters insaturés, des vinyléthers, des allyléthers, des composés de dicyclopentadiène et des graisses insaturées ; en particulier des diols aromatiques, comme des (en particulier di-) (méth)acrylates, des époxy(méth)acrylates de bis-phénol A, de bis-phénol F ou de Novolak, à chaque fois propoxylés ou en particulier éthoxylés, en particulier sous forme de produits de transformation de diépoxydes ou de polyépoxydes, par exemple des di- ou polyglycidyléthers de bis-phénol A, de bis-phénol F ou de Novolak, avec des acides carboxyliques insaturés, par exemple des acides C₂₋₇-alcènecarboxyliques, comme en particulier l'acide (méth)acrylique (appartenant ici aux esters de vinyle) ; des uréthane(méth)acrylates et/ou des urée(méth)acrylates, en particulier des uréthane(méth)acrylates qui ont été obtenus par exemple par la transformation de diisocyanates et/ou de polyisocyanates avec des composés (méth)acryliques, comme par exemple le méthacrylate d'hydroxyéthyle ou le méthacrylate d'hydroxypropyle, éventuellement avec l'implication de composés hydroxy, qui contiennent au moins deux groupes hydroxyle ; ou des résines de polyester insaturées, ou deux ou plus de ces composants organiques insaturés durcissables, en particulier des résines d'ester de vinyle ;
en tant que composant (a2) une résine époxyde est contenue, de préférence à base de composés de glycidyle, par exemple ceux dotés d'une fonctionnalité moyenne de groupes glycidyle de 1,5 ou plus, en particulier de 2 ou plus, par exemple de 2 à 10, qui peuvent éventuellement contenir un autre ou d'autres éthers de glycidyle en tant que diluants réactifs, de préférence un poly(inclus di-)glycidyléther d'au moins un alcool ou phénol polyvalent, comme le Novolak, le bis-phénol F ou le bisphénol A, des mélanges de ces époxydes, par exemple pouvant être obtenus par transformation des alcools polyvalents correspondants avec l'épichlorhydrine, comme le triméthylolpropanetriglycidyléther, les résines d'époxydes-Novolak, les résines d'épichlorhydrine-bis-phénol A et/ou les résines d'épichlorhydrine-bis-phénol F, par exemple avec un poids moléculaire moyen ≤ 2000 ;
et dans le composant (H)
en tant que composant (h1) une aldimine ou une cétimine est contenue, comme défini plus précisément dans une des revendications précédentes, ou un mélange correspondant,
en tant que composant (h2) des diamines ou des polyamines sont contenues, en particulier à chaque fois une ou plusieurs alkylamines, comme par exemple le 1,2-diaminoéthane, la 2-méthylpentanediamine, la 2,2-diméthyl-1,3-propanediamine, la diéthylaminopropylamine ou la 2,2,4- ou 2,4,4-triméthylhexaméthylènediamine ; des hétéroalkylamines, comme par exemple le 1,13-diamino-4,7,10-trioxatridécane ; les polyoxyalkylènes fonctionnalisés par amine [Jeffamine] ; la diméthylaminopropylaminopropylamine, la triéthylènetétramine et/ou des homologues supérieurs ; des cycloalkylamines, comme par exemple l'isophoronediamine, le 1,3-et/ou le 1,4-bisaminométhylcyclohexane, la TCD-diamine, le 1,2-et le 1,4-diaminocyclohexane, le bis(4-aminocyclohexyl)méthane, le bis(4-amino-3-méthylcyclohexyl)méthane, la norbornanediamine, le diaminodicyclohexylméthane ou le 2,2-bis(4-aminocyclohexyl)propane, des hétérocycloalkylamines, comme par exemple l'aminoéthylpipérazine, ou des amines aliphatiques-aromatiques, comme la 1,3- ou la 1,4-benzènediméthaneamine, ou deux ou plus de ces composés ; en particulier la 2-méthylpentanediamine, le 1,2-diaminocyclohexane, le 1-amino-3-aminométhyl-3,5,5-triméthylcyclohexane, la 1,3-benzènediméthaneamine, la 1,4-benzènediméthaneamine, le 1,6-diamino-2,2,4-triméthylhexane, la triéthylènetétramine, la tétraéthylènepentamine, la pentaéthylènehexamine, la N-aminoéthylpipérazine, le 1,3-bis(aminométhyl)cyclohexane, la TCD-diamine, la Jeffamine, la dipropylènetriamine, la N,N'-dicyclohexyl-1,6-hexanediamine, le N,N'-diméthyl-1,3-diaminopropane, le N,N'-diéthyl-1,3-diaminopropane, le N,N-diméthyl-1,3-diaminopropane, des polyoxypropylènediamines et des polyoxypropylènetriamines secondaires, le 2,5-diamino-2,5-diméthylhexane, le bis-(aminométhyl)tricyclopentadiène, le 1,8-diamino-p-menthane ou le bis-(4-amino-3,5-diméthylcyclohexyl)méthane, ou des mélanges de deux ou plus de ces composés ; et/ou un ou plusieurs aminoalkylsilanes, qui contiennent au moins un groupe hydrolysable lié au silicium.

9. Système de résine hybride selon l'une quelconque des revendications 1 à 8, dans lequel la proportion en poids du ou des durcisseur(s) (h1) et/ou (h2) et/ou éventuellement (h3) et/ou des précurseurs d'aldimine possibles se situant de préférence dans la plage de 0,01 à 50 % en poids, par exemple entre 0,5 et 40 % en poids ou entre 1 et 30 % en poids ou en particulier de 0,1 à 40, par exemple de 0,5 à 30 % en poids ; la proportion en poids de la résine de réaction (a1) se situant dans la plage de 0,1 à 80 % en poids, par exemple entre 0,5 et 75 % en poids ou entre 1 et 40 % en poids ou en particulier de 5 à 60, par exemple 20 à 50 % en poids, et la proportion de la résine de réaction (a2), de préférence conjointement avec le composé pontant éventuel (a3), par rapport à la masse totale du système de résine hybride est de 0,1 à moins de 80 % en poids, en particulier 5 à 75 % en poids, 5 à 70 % en poids ou 5 à 50 % en poids.

10. Système de résine hybride selon l'une quelconque des revendications 1 à 9, dans lequel, en tant qu'activateurs sous forme d'un sel métallique, ce qui inclut également des complexes métalliques et des oxydes métalliques, on utilise un ou plusieurs sels métalliques d'acides organiques et/ou inorganiques avec des métaux, par exemple choisis parmi le cuivre, le fer, le vanadium, manganèse, cérium, le cobalt, le zirconium et le bismuth, ou des mélanges de deux ou plus de ceux-ci ; les sels métalliques étant de préférence choisis dans le groupe qui est constitué par les sels de cuivre, de fer, de manganèse, de cobalt et de vanadium et les sels métalliques préférés sont ceux de sulfates, de nitrates ou de chlorures de radicaux acides inorganiques, ou préférablement des sels métalliques avec des radicaux acides organiques, qui sont particulièrement préférés en tant que sels métalliques, des carboxylates, comme des octanoates, des naphténates, des acétates, des tartrates, des gluconates ou des butyrates.

11. Utilisation d'un système de résine hybride selon l'une quelconque des revendications 1 à 10 en tant qu'adhésif, matière de revêtement ou masse moulée.

12. Utilisation d'un système de résine hybride selon l'une quelconque des revendications 1 à 10 pour la fixation de moyens d'ancrage dans des substrats de construction.

13. Procédé ou méthode pour la fixation de moyens d'ancrage dans des trous ou des fissures, un système de résine hybride selon l'une quelconque des revendications 1 à 10 et un moyen d'ancrage étant introduits l'un après l'autre ou simultanément dans un trou ou dans une fissure dans un substrat de construction, ou pour la fixation de fibres, de treillis, de tissus ou de composites pour le renforcement de bâtiments, dans lequel/laquelle un système de résine hybride selon l'une quelconque des revendications 1 à 10 est utilisé en tant que produit de fixation.
